# EUROPÄISCHE PATENTSCHRIFT

(11) **EP 2 825 578 B1**
(45) Veröffentlichungstag und Bekanntmachung des Hinweises auf die Patenterteilung: **18.05.2016**
(21) Anmeldenummer: 13708827.4
(22) Anmeldetag: 12.03.2013
(51) Int. Cl.: C08G 18/28, C08G 18/67, C08G 18/79, C08G 77/388, C08G 77/46, C09D 175/16, C09D 7/12, C09D 167/07

(54) **VERWENDUNG VON POLYISOCYANATADDUKTEN ALS ADDITIVE FÜR STRAHLENHÄRTBARE BESCHICHTUNGSMITTELZUSAMMENSETZUNGEN**
USE OF POLYISOCYANATE ADDUCTS AS ADDITIVES FOR RADIATION CURABLE COATING COMPOSITIONS
UTILISATION DES PRODUITS D'ADDITION DE POLYISOCYANATE COMME ADDITIFS POUR COMPOSITIONS DE PRODUITS DE REVÊTEMENT DURCISSABLES PAR RAYONNEMENT

(30) Priorität: 12.03.2012 EP 12159061
(43) Veröffentlichungstag der Anmeldung: 21.01.2015
(73) Patentinhaber: BYK-Chemie GmbH, 46483 Wesel (DE)
(72) Erfinder: HANS, Marc, 46485 Wesel (DE); JAUNKY, Wojciech, 46485 Wesel (DE); HARTMANN, Jürgen, 46147 Oberhausen (DE); OMEIS, Jürgen, 46286 Dorsten-Lembeck (DE)
(74) Vertreter: Leifert & Steffan
(86) Internationale Anmeldenummer: PCT/EP2013/054985
(87) Internationale Veröffentlichungsnummer: WO 2013/135686

(56) Entgegenhaltungen:
- WO-A1-99/18043
- JP-A- 2006 045 504
- US-A1- 2007 112 164

## Beschreibung

### Gebiet der Erfindung

Die vorliegende Erfindung betrifft die Verwendung von 0,01 bis 5 Gew.-% Polyisocyanataddukten als Additive in Beschichtungsmittelzusammensetzungen. Die vorliegende Erfindung betrifft weiterhin Beschichtungsmittelzusammensetzungen, die die Polyisocyanataddukte enthalten.

### Stand der Technik

Bei der Strahlenhärtung werden mittels energiereicher Strahlung, wie zum Beispiel UV-Licht oder Elektronenstrahlen, reaktive Monomere und Oligomere in hochmolekulare Materialien umgewandelt. Die Strahlenhärtung ist im Vergleich zur Wärmebehandlung ein sehr schneller Prozess, welcher hohe Produktionsgeschwindigkeiten ermöglicht. Zusätzlich erlaubt die schnelle Härtung eine platzsparende und materialschonende Arbeitsweise. Die Strahlenhärtung bietet im Hinblick auf die Umwelt klare Vorteile, wie zum Beispiel niedrige Emissionswerte und einen niedrigeren Energiebedarf. Die Strahlenhärtung wird zum Beispiel zur Herstellung von Beschichtungswerkstoffen, Lacken, Druckfarben usw. eingesetzt. Die Beschichtungen zeichnen sich in vielen Fällen durch eine bessere Qualität aus, vor allem hinsichtlich Glanz und Abriebfestigkeit.

Strahlenhärtbare Beschichtungen, Druckfarben und/oder Drucklacke sind beispielsweise in "UV & EB Curing Formulations for Printing Inks, Coatings & Paints" R.Holman, P. Oldring, London 1988 beschrieben.

Aufgrund der rapiden Ausbreitung dieser Technologie steigen die Anforderungen an strahlenhärtbare Zusammensetzungen stetig und werden zusehends vielfältiger. Die Additivierung von härtbaren Zusammensetzungen ist ein Verfahren, um gehärtete Produkte mit verbesserten Eigenschaften zu erhalten.

Um zum Beispiel schmutzabweisende Beschichtungen mit sogenannten Easy-to-clean Eigenschaften zu erhalten, werden heute üblicherweise Fluor- und/oder Silikonverbindungen eingesetzt. WO 98/03574 beschreibt Fluor-enthaltende α,ω-hydroxyfunktionelle Polysiloxane, die zum Beispiel genutzt werden können, um verschiedenen industriellen Werkstoffen Eigenschaften wie Wasser- und Ölabweisung, Antifouling- und Release-Eigenschaften zu geben.

In WO 2005/066224 A1 werden wasser- und öl-abweisende Fluoroacrylate beschrieben, die aus urethanenthaltenden fluorierten Makromonomeren aufgebaut sind.

Aufgrund der ökologischen Bedenken gegenüber perfluorierten Kohlenwasserstoffen besteht ein Bedarf an fluorfreien Verbindungen. Bei der Verwendung von Additiven in strahlenhärtbaren Zusammensetzungen ist es des Weiteren vorteilhaft, dass die Additive mit dem Bindemittel reagieren können, also polymerisierbare Gruppen enthalten. Die Einbindung der Additive in die gehärtete Zusammensetzung ermöglicht permanente Eigenschaften und verhindert, dass die Additive sich an der Oberfläche ansammeln und zu einem störenden Film führen. Des Weiteren spielt die Einbindung der Additive eine wichtige Rolle bei Beschichtungen für Substrate, die beispielsweise in der Lebensmittelindustrie als Behälter oder Verpackungen eingesetzt werden. Migration und Austritt der Polymere aus der Lackschicht im Rahmen der Beschichtung für Lebensmittelverpackungen würde sich als sehr nachteilig erweisen.

Eine geeignete Technologie zur Synthese von (meth)acrylfunktionellen Polysiloxanen ist die Reaktion von funktionellen (Meth)acrylaten und funktionellen Polysiloxanen mit mindestens difunktionellen Isocyanaten.

Die folgenden strahlenhärtbaren Urethan- sowie Harnstoffgruppen enthaltenden Polysiloxan(meth)acrylate sind ebenfalls aus der Literatur bekannt und werden in strahlenhärtbaren Beschichtungsmittelzusammensetzungen verwendet:

In "Preparation and properties of UV-curable poly(dimethylsiloxane)urethane acrylate. Chiang, Wen-Yen; Shu, Wey-Jye. Dep. Chem. Eng., Tatung Inst. Technol., Taipei, Taiwan. Angewandte Makromolekulare Chemie (1988), 160 41-66" sowie in "Preparation and properties of UV-curable poly(dimethylsiloxane)urethane acrylate. II. Property-Structure/Molecular-weight relationships. Chiang, Wen-Yen; Shu, Wey-Jye. Dep. Chem. Eng., Tatung Inst. Technol., Taipei, Taiwan. Journal of Applied Polymer Science (1988), 36, 1889-1907", werden UV-härtbare Urethangruppen enthaltende Polysiloxanacrylate offenbart, welche auf Basis von Polydimethylsiloxan-α,ω-diol (PDMS), einem Diisocyanat und einem Hydroxyethylmethacrylat hergestellt werden. Untersucht wurden die physikalischen Eigenschaften dieser UV-härtbaren Materialien, insbesondere im Hinblick auf deren Abhängigkeiten vom Stoffmengenanteil des PDMS oder deren Abhängigkeit von der Art des eingesetzten Diisocyanats. Ebenso wurde der Einfluss verschiedener Reaktiwerdünner und einiger Pigmente untersucht.

In "Properties of ultraviolet cured polydimethylsiloxane-urea acrylates. Yu, X.; Nagarajan, M. R.; Li, C.; Speckhard, T. A.; Cooper, S. L. Dep. Chem. Eng., Univ. Wisconsin, Madison, WI, USA. Journal of Applied Polymer Science (1985), 30(5), 2115-2135", werden UV-härtbare Hamstoffgruppen enthaltende Polysiloxanacrylate offenbart, welche auf Basis von Aminopropyl-terminierten Polydimethylsiloxanen (ATPS) und einem Isocyanatoethylmethacrylat hergestellt werden. Die so erhaltenen Oligomere werden durch UV-Strahlung in Anwesenheit von Reaktivverdünnern gehärtet. Die physikalischen Eigenschaften der so erhaltenen UV-härtbaren Materialien wurden insbesondere im Hinblick auf deren Abhängigkeiten vom Stoffmengenanteil des ATPS oder deren Abhängigkeit von der Art des eingesetzten Reaktiwerdünners untersucht.

Umsetzungsprodukte entsprechend funktionalisierter Polysiloxane mit Isocyanaten und (Meth)acrylaten sind in der Literatur beschrieben. Zum Beispiel beschreibt WO00/12588 u.a. die Verwendung solcher Polymere in der Haarkosmetik. EP0937998A beschreibt die Verwendung von Polysiloxanen, die über eine Urethangruppe mit polymerisierbaren Gruppen verknüpft sind, in Kontaktlinsenmaterialien.

Die EP 1469029 B1 beschreibt Polyestersiloxanacrylate, hergestellt durch die Umsetzung von α,ω-organisch modifizierten Polysiloxanen mit Isocyanaten und einem oder mehreren Polyester(meth)acrylaten, und deren Verwendung in strahlenhärtbaren Beschichtungen.

Die WO 98/46693 A1 beschreibt eine flüssige härtbare Harzzusammensetzung welche zu gehärteten Beschichtungsmaterialien für eine Bandmatrix (ribbon matrix) für optische Fasern und Ummantelungsfasern mit guten Oberflächengleiteigenschaften führt. Die Zusammensetzung enthält zwei verschiedene Polydimethylsiloxane (PDMS). Das erste PDMS enthält mindestens zwei Urethanbindungen, eine organische Gruppe, welche nicht radikalisch polymerisierbar ist und an mindestens ein Ende des ersten PDMS gebunden ist und eine (Meth)acryloylgruppe an wenigstens einem Ende des ersten PDMS. Das zweite PDMS enthält mindestens zwei Urethangruppen und eine organische Gruppe, welche keine Gruppe enthält, welche radikalisch polymerisierbar ist. Die besagte organische Gruppe ist ebenfalls an mindestens ein Ende des zweiten PDMS gebunden. Die besagten Polymere werden in Additivmengen eingesetzt.

Aufgrund der oben aufgezählten Vorteile werden strahlenhärtbare Beschichtungsmittelzusammensetzungen immer bedeutsamer. Somit besteht ein ständig wachsender Bedarf an strahlenhärtbaren Zusammensetzungen, welche verträgliche Additive enthalten, die nicht zu Trübungen und/oder Oberflächenstörungen, sondern zu gehärteten Produkten mit ausgezeichneten Oberflächeneigenschaften führen. Des Weiteren sind gute Oberflächengleiteigenschaften, und Kratzbeständigkeit, sowie wasser- und ölabweisende Eigenschaften und eine erhöhte Beständigkeit gegenüber Verschmutzungen aller Art des gehärteten Produktes erwünscht.

Der vorliegenden Erfindung lag also die Aufgabe zugrunde, ein strahlenhärtbares, polysiloxanhaltiges Additiv zur Verwendung in strahlenhärtbaren Beschichtungsmittelzusammensetzungen zur Verfügung zu stellen, welches im Vergleich zu den aus dem Stand der Technik bekannten Verbindungen eine hohe Verträglichkeit in einer Vielzahl von strahlenhärtbaren Beschichtungsmittelzusammensetzungen und Beschichtungen aufweist und zugleich zu ausgezeichneten Oberflächeneigenschaften führt.

Mit Hilfe des Gegenstands der vorliegenden Erfindung sollen Beschichtungen mit verbesserten Oberflächeneigenschaften erhalten werden. Hierunter ist die hervorragende Balance zwischen einer geringen Kraterbildung, eines hervorragenden Verlaufs sowie einer geringeren Trübung und anderen vorteilhaften Eigenschaften wie der Beständigkeit gegenüber Verschmutzungen sowie hervorragenden Gleiteigenschaften zu verstehen. Der vorliegenden Erfindung lag weiterhin die Aufgabe zugrunde, vorteilhafte Eigenschaften wie eine geringe Kraterbildung, einen hervorragenden Verlauf, eine geringere Trübung und die Beständigkeit gegenüber Verschmutzungen beizubehalten und die Gleiteigenschaften gegenüber dem Stand der Technik weiter zu verbessern.

Überraschenderweise wurde gefunden, dass die vorliegende Aufgabe durch die Verwendung von 0,01 bis 5 Gew.-% der Polyisocyanataddukte gelöst wurde, welche erhältlich sind durch Umsetzung von
i. mindestens einem Polysiloxan, welches die folgende Struktur (I) besitzt 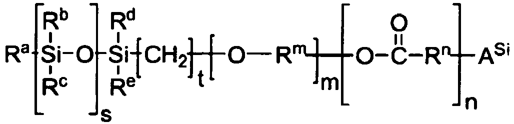
   wobei t = 2 bis 30, m = 0 bis 100, n = 0 bis 100, s = 1 bis 400,
   R^{a} für einen halogenierten Alkylrest mit 1 bis 30 Kohlenstoffatomen, einen linearen Alkylrest mit 1 bis 30 Kohlenstoffatomen, einen verzweigten oder zyklischen Alkylrest mit 3 bis 30 Kohlenstoffatomen oder einen Arylrest mit 6 bis 30 Kohlenstoffatomen oder einen Alkylarylrest oder einen Arylalkylrest mit 7 bis 30 Kohlenstoffatomen steht,
   alle R^{b}, R^{c}, R^{d} und R^{e} unabhängig voneinander für lineare Alkylreste mit 1 bis 6 Kohlenstoffatomen, verzweigte oder zyklische Alkylreste mit 3 bis 6 Kohlenstoffatomen oder Arylreste mit 6 bis 12 Kohlenstoffatomen oder Alkylarylreste oder Arylalkylreste mit 7 bis 12 Kohlenstoffatomen stehen,
   R^{d} und R^{e} zudem unabhängig voneinander für R^{a}[SiR^{b}R^{c}O]ₛ stehen können, wobei R^{a}, R^{b}, R^{c} und s wie oben definiert sind und unabhängig davon ausgewählt sind, die m (O-R^{m})-Einheiten und die n (O-CO-Rⁿ)-Einheiten in der Struktureinheit [O-R^{m}]ₘ-[O-CO-Rⁿ]ₙ in beliebiger Reihenfolge angeordnet sind,
   R^{m} für einen linearen Alkylenrest mit 2 bis 4 Kohlenstoffatomen oder einen verzweigten Alkylenrest mit 3 oder 4 Kohlenstoffatomen steht,
   Rⁿ für einen linearen Alkylenrest mit 2 bis 6 Kohlenstoffatomen oder einen verzweigten Alkylenrest mit 3 bis 6 Kohlenstoffatomen oder einen zyklischen Alkylenrest mit 3 bis 6 Kohlenstoffatomen steht,
   die Reste R^{m} und Rⁿ für jede der m (O-R^{m})-Einheiten und jede der n (O-CO-Rⁿ)-Einheiten unabhängig gewählt werden,
   und es sich bei A^{Si} um eine OH-, NH₂- oder CO₂H-Grupp handelt;
ii. mindestens einem Polyisocyanat mit mindestens drei NCO-Gruppen,
iii. mindestens einem (Meth)acrylat, welches die folgende Struktur (II) besitzt: 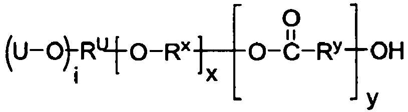
   wobei x = 0 bis 100, y = 0 bis 100,
   U für eine der folgenden Gruppen steht: 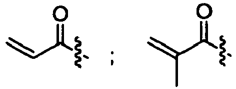
   R^{U} für einen (i+1 )-bindigen organischen Rest mit i = 1 bis 5 steht,
   die x (O-R^{x})-Einheiten und die y (O-CO-R^{y})-Einheiten in der Struktureinheit [O-R^{x}]ₓ-[O-CO-R^{y}]_{y} in beliebiger Reihenfolge angeordnet sind,
   R^{x} für einen linearen Alkylenrest mit 2 bis 4 Kohlenstoffatomen oder einen verzweigten Alkylenrest mit 3 oder 4 Kohlenstoffatomen steht,
   R^{y} für einen linearen Alkylenrest mit 2 bis 6 Kohlenstoffatomen oder einen verzweigten Alkylenrest mit 3 bis 6 Kohlenstoffatomen oder einen zyklischen Alkylenrest mit 3 bis 6 Kohlenstoffatomen steht,
   die Reste R^{x} und R^{y} für jede der x (O-R^{x})-Einheiten und jede der y (O-CO-R^{y})-Einheiten unabhängig gewählt werden,
      und
iv. optional einer oder mehrerer mit Isocyanaten reaktiven Verbindungen der Struktur (III), welche von den unter i bis iii eingesetzten Komponenten verschieden ist:
   R^{z}-(A^{z})_{z} ; mit z = 1 oder 2
   wobei R^{z} für einen aliphatischen oder aromatischen Rest steht und es sich bei A^{z} um eine OH-, NH₂- oder CO₂H-Gruppe handelt,
   und m + n + x + y ≥ 3 ist,
   als Additive in strahlenhärtbaren Beschichtungsmittelzusammensetzungen, wobei sich die gewichtsprozentuale Angabe auf die Gesamtformulierung der strahlenhärtbaren Beschichtungsmittelzusammensetzung bezieht.

Im Folgenden soll unter einem Polyisocyanataddukt das Reaktionsprodukt eines Polyisocyanats mit Verbindungen, welche eine OH-, NH₂- oder CO₂H-Gruppe enthalten, verstanden werden.

Der Begriff (Meth)acrylat umfasst hierin sowohl Acrylat als auch Methacrylat. Für den Fall i > 1 können ausschließlich Acrylatgruppen, ausschließlich Methacrylatgruppen oder sowohl Acrylat- als auch Methacrylatgruppen vorhanden sein. Bevorzugt werden Acrylatgruppen eingesetzt.

In dem Polysiloxan der Struktur (I) nimmt t Werte von 2 bis 30 und s Werte von 1 bis 400 an. Bevorzugt ist t = 3 bis 6 und besonders bevorzugt t = 3. Weiterhin bevorzugt ist s = 4 bis 200.
Der Rest R^{a} steht für einen halogenierten Alkylrest mit 1 bis 30 Kohlenstoffatomen, einen linearen Alkylrest mit 1 bis 30, vorzugsweise 1 bis 6 Kohlenstoffatomen, einen verzweigten oder zyklischen Alkylrest mit 3 bis 30 Kohlenstoffatomen oder einen Arylrest mit 6 bis 30 Kohlenstoffatomen oder einen Alkylarylrest oder einen Arylalkylrest mit 7 bis 30 Kohlenstoffatomen.

Bevorzugt ist R^{a} nicht fluoriert. Besonders bevorzugt ist R^{a} nicht halogeniert. R^{a} steht bevorzugt für einen Methyl-, Ethyl-, Propyl- oder Butylrest und ganz besonders bevorzugt für einen Methyl- oder einen Butylrest.

Die Reste R^{b}, R^{c}, R^{d} und R^{e} stehen unabhängig voneinander für lineare Alkylreste mit 1 bis 6 Kohlenstoffatomen, verzweigte oder zyklische Alkylreste mit 3 bis 6 Kohlenstoffatomen oder Arylreste mit 6 bis 12 Kohlenstoffatomen oder Alkylarylreste oder Arylalkylreste mit 7 bis 12 Kohlenstoffatomen.

Die Reste R^{d} und R^{e} können außerdem unabhängig voneinander für R^{a}[SiR^{b}R^{c}O]ₛ stehen, wobei R^{a}, R^{b}, R^{c} und s wie oben definiert sind und unabhängig davon ausgewählt sind.

Vorzugsweise handelt es sich bei R^{b}, R^{c}, R^{d} und R^{e} unabhängig voneinander für lineare Alkylreste mit 1 bis 6 Kohlenstoffatomen, gesättigte verzweigte oder zyklische Alkylreste mit 3 bis 6 Kohlenstoffatomen oder Arylreste mit 6 bis 12 Kohlenstoffatomen oder Alkylarylrest oder Arylalkylreste mit 7 bis 12 Kohlenstoffatomen.

Besonders bevorzugt stehen R^{b}, R^{c}, R^{d} und R^{e} unabhängig voneinander für Methyl-, Ethyl-, Propyl,- Butyl-, Phenyl- oder substituierte Phenylreste, ganz besonders bevorzugt für Methylreste.

Die m (O-R^{m})-Einheiten und die n (O-CO-Rⁿ)-Einheiten sind in der Struktureinheit [O-R^{m}]ₘ-[O-CO-Rⁿ]ₙ in beliebiger Reihenfolge angeordnet.

Bevorzugt liegt die Struktureinheit [OR^{m}]ₘ-[O-CO-Rⁿ]ₙ bezogen auf die m (O-R^{m})-Einheiten und die n (O-CO-Rⁿ)-Einheiten in Form eines Multiblockcopolymers vor. Besonders bevorzugt liegt die Struktureinheit [O-R^{m}]ₘ-[O-CO-Rⁿ]ₙ bezogen auf die m (O-R^{m})-Einheiten und die n (O-CO-Rⁿ)-Einheiten in Form eines Diblockcopolymers vor. Ganz besonders bevorzugt sind ausschließlich Polyethergruppen und keine Polyestergruppen vorhanden. Ebenfalls ganz besonders bevorzugt enthält die Struktur (I) lediglich eine (O-R^{m})-Einheit und keine weiteren Polyestergruppen.

Der Rest R^{m} steht für einen linearen Alkylenrest mit 2 bis 4 Kohlenstoffatomen oder einen verzweigten Alkylenrest mit 3 oder 4 Kohlenstoffatomen.

Bevorzugt handelt es sich bei R^{m} um einen Ethylen-, Propylen-, oder Butylenrest, besonders bevorzugt um einen Ethylen- oder Propylenrest und ganz besonders bevorzugt um einen Ethylenrest.

In dem Polysiloxan der Struktur (I) nimmt m die Werte 0 bis 100 an. Es ist bevorzugt, dass m Werte von m = 1 bis 50 und besonders bevorzugt von m = 1 bis 25 annimmt.

Der Rest Rⁿ steht für einen linearen Alkylenrest mit 2 bis 6 Kohlenstoffatomen oder einen verzweigten Alkylenrest mit 3 bis 6 Kohlenstoffatomen oder einen zyklischen Alkylenrest mit 3 bis 6 Kohlenstoffatomen.

Vorzugsweise handelt es sich bei Rⁿ um einen linearen Alkylenrest mit 4 oder 5, ganz besonders bevorzugt mit 5 Kohlenstoffatomen.

In dem Polysiloxan der Struktur (I) nimmt n die Werte 0 bis 100 an. Es ist bevorzugt, dass n Werte von n = 0 bis 15 annimmt.

Die Reste R^{m} und Rⁿ werden für jede der m (O-R^{m})-Einheiten und jede der n (O-CO-Rⁿ)-Einheiten unabhängig gewählt. Bevorzugt sind in einem Block aus (O-R^{m})-Einheiten die R^{m} in allen (O-R^{m})-Einheiten identisch. Es ist ebenfalls bevorzugt, dass in einem Block aus (O-R^{m})-Einheiten insgesamt nur zwei verschiedene Arten von Resten R^{m} vorhanden sind.

Es ist weiterhin bevorzugt, dass in einem Block aus (O-CO-Rⁿ)-Einheiten die Rⁿ in allen (O-CO-Rⁿ)-Einheiten identisch sind.

Bei A^{Si} handelt es sich um eine OH-, NH₂- oder CO₂H-Gruppe. Bevorzugt handelt es sich um eine OH-Gruppe.

Das Polysiloxan der Struktur (I) besitzt eine lineare oder verzweigte, vorzugsweise eine lineare Struktur. Der R^{a}[SiR^{b}R^{c}O]SiR^{d}R^{e}-Rest des Polysiloxans der Struktur (I) besitzt vorzugsweise ein gewichtsmittleres Molekulargewicht im Bereich von 200 bis 30000 g/mol, besonders bevorzugt im Bereich von 500 bis 10000 g/mol und ganz besonders bevorzugt im Bereich von 500 bis 5000 g/mol.

Zur Bestimmung des gewichtsmittleren Molekulargewichtes wird das entsprechende Molekulargewicht des korrespondierenden mono-SiH-funktionellen Polysiloxans der allgemeinen Formel R^{a}[SiR^{b}R^{c}O]SiR^{d}R^{e}-H mittels Gelpermeationschromatographie gegen einen Polystyrolstandard gemessen. Als Elutionsmittel wird Tetrahydrofuran verwendet. Das Säulenmaterial besteht aus Styrol-Divinylbenzol-Copolymeren.

Die einzusetzenden Polyisocyanate enthalten mindestens drei NCO-Gruppen. Bei Polyisocyanaten kann es sich um Oligomere handeln, die Isocyanurat-, Biuret-, Allophanat-, Iminooxadiazindion-, Urethan-, Carbodiimid-, Harnstoff und/oder Uretdiongruppen enthalten. Solche Verbindungen lassen sich aus Diisocyanaten herstellen. Entsprechende Reaktionen sind in RÖMPP Lexikon, Lacke und Druckfarben, 10. Auflage, Georg Thieme Verlag 1998, "Polyisocyanate" Seite 463 genannt.

Als Diisocyanate zur Herstellung der Polyisocyanate werden bevorzugt aliphatische, cycloaliphatische oder araliphatische Diisocyanate eingesetzt. Zum Beispiel werden Aryl-substituierte aliphatische Diisocyanate, wie beschrieben in Houben-Weyl, Methoden der Organischen Chemie, Volume 14/2, Seiten 61-70 und in einem Artikel von W. Siefken, Justus Liebig's Annalen der Chemie 562, Seiten 75-136, eingesetzt.

Bevorzugte Beispiele sind 1,2-Ethylendiisocyanat, 1,4-Tetramethylendiisocyanat, 1,6-Hexamethylendiisocyanat (HDI), 2,2,4-(2,4,4)-Tri-methyl-1,6-hexamethylendiisocyanat (TMDI), 1,9-Diisocyanato-5-methylnonan, 1,8-Diisocyanato-2,4-dimethyloctan, 1,12-Dodecandiisocyanat, w,w'-Diisocyanatodipropylether, Cyclobuten-1,3-diisocyanat, Cyclohexan-1,3- und -1,4-diisocyanat, 3-Isocyanato-methyl-3,5,5-trimethyl-cyclohexylisocyanat (Isophorondiisocyanat, IPDI), 1,4-Diisocyanatomethyl-2,3,5,6-tetramethyl-cyclohexan, Decahydro-8-methyl-(1,4-methano-naphthalen-2 (oder 3), 5-ylendimethylendiisocyanat, Hexahydro-4,7-methano-indan-1 (oder 2), 5 (oder 6) ylendimethylendiisocyanat, Hexahydro-4,7-methanoindan-1 (oder 2), 5 (oder 6) ylendiisocyanat, 2,4- und/oder 2,6-Hexahydrotoluylendiisocyanat (H6-TDI), 2,4-und/oder 2,6-Toluoldiisocyanat (TDI), Perhydro-2,4'-diphenylmethandiisocyanat, Perhydro-4,4'-diphenylmethandiisocyanat (H₁₂MDI), 4,4'-Diisocyanato-3,3',5,5'-tetramethyldicyclohexylmethan, 4,4'-Diisocyanato-2,2',3,3',5,5'.6,6'-octamethyldicyclohexylmethan, ω,ω'-DÜsocyanato-1,4-diethylbenzen, 1,4-Diisocyanatomethyl-2,3,5,6-tetramethylbenzen, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, sowie jede Mischung dieser Verbindungen. Weitere bevorzugte Isocyanate werden beschrieben in dem genannten Artikel von *Siefken* auf Seiten 122 ff. 2,5(2,6)-Bis(isocyanatomethyl)bicyclo[2.2.1]heptan (NBDI) ist bevorzugt in reiner Form oder als Teil eines Gemisches. Besonders bevorzugt sind die technisch einfach zu erhaltenen aliphatischen und cycloaliphatischen Isocyanate und deren Isomer-Gemische.

Bevorzugt sind die Polyisocyanate durch Trimerisierung von Diisocyanaten darstellbar. Die resultierenden Trimerisate werden als Isocyanurate bezeichnet.

Besonders bevorzugt werden zum Beispiel Trimere aus HMDI und IPDI, eingesetzt. Solche Polyisocyanate sind zum Beispiel unter den Handelsnamen Desmodur N3300 von der Bayer AG und Vestanat T18907100 von der Degussa AG erhältlich.

Es ist weiterhin bevorzugt, dass das Polyisocyanat selbst keine Urethangruppen enthält.

In dem (Meth)acrylat der Struktur (II) steht der Rest U für eine der folgenden Gruppen:

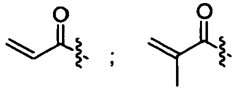

Weiterhin steht der Rest R^{U} für einen (i+1)-bindigen organischen Rest mit i = 1 bis 5. Bevorzugt ist i = 1. Für i = 1 handelt es sich bei R^{U} bevorzugt um einen linearen Alkylenrest mit 2 bis 4 Kohlenstoffatomen oder einem verzweigten Alkylenrest mit 3 bis 4 Kohlenstoffatomen. Besonders bevorzugt handelt es sich für i = 1 bei R^{U} um einen Ethylenrest.

Es ist ebenfalls bevorzugt, dass genau ein (Meth)acrylat der Struktur (II) mit i = 1 und genau ein (Meth)acrylat der Struktur (II) mit i > 1 eingesetzt werden. Der Anteil des (Meth)acrylats der Struktur (II) mit i > 1 liegt dabei bevorzugt im Bereich von 5 bis 50 mol%, besonders bevorzugt im Bereich von 10 bis 40 mol% und ganz besonders bevorzugt im Bereich von 20 bis 30 mol-%, jeweils bezogen auf die Gesamtstoffmenge des (Meth)acrylats der Struktur (II) mit i = 1 und des (Meth)acrylats der Struktur (II) mit i > 1.

Für i = 2 handelt es sich bei (U-O-)ᵢ-R^{U}- vorzugsweise um einen entsprechenden Trimethylolpropanrest.
Für i = 3 handelt es sich bei (U-O-)ᵢ-R^{U}- vorzugsweise um einen entsprechenden Pentaerythritolrest.
Für i = 4 handelt es sich bei (U-O-)ᵢ-R^{U}- vorzugsweise um einen entsprechenden Pentaerythritoltrimethyloletherrest.
Für i = 5 handelt es sich bei (U-O-)ᵢ-R^{U}- vorzugsweise um einen entsprechenden Dipentaerythritolrest.

Die x (O-R^{x})-Einheiten und die y (O-CO-R^{y})-Einheiten sind in der Struktureinheit [O-R^{x}]ₓ-[O-CO-R^{y}]_{y} in beliebiger Reihenfolge angeordnet.

Analog zur Struktur (I) liegt die Struktureinheit [O-R^{x}]ₓ-[O-CO-R^{y}]_{y} bevorzugt in Form eines Multiblockcopolymers und besonders bevorzugt in Form eines Diblockcopolymer vor. Ganz besonders bevorzugt sind entweder nur Polyethergruppen oder nur Polyestergruppen vorhanden.

Der Rest R^{x} steht für einen linearen Alkylenrest mit 2 bis 4 Kohlenstoffatomen oder einen verzweigten Alkylenrest mit 3 oder 4 Kohlenstoffatomen.

Bevorzugt handelt es sich bei R^{x} um einen Ethylen-, Propylen-, oder Butylenrest, besonders bevorzugt um einen Ethylen- oder Propylenrest und ganz besonders bevorzugt um einen Ethylenrest.

In dem (Meth)acrylat der Struktur (II) nimmt x Werte von 0 bis 100 an. Bevorzugt ist x = 0 bis 25.

Der Rest R^{y} steht für einen linearen Alkylenrest mit 2 bis 6 Kohlenstoffatomen oder einen verzweigten Alkylenrest mit 3 bis 6 Kohlenstoffatomen oder einen zyklischen Alkylenrest mit 3 bis 6 Kohlenstoffatomen.

Vorzugsweise handelt es sich bei R^{y} um einen linearen Alkylenrest mit 4 bis 6, bevorzugt 5 Kohlenstoffatomen.

In dem (Meth)acrylat der Struktur (II) nimmt y Werte von 0 bis 100 ein. Bevorzugt beträgt y = 2 bis 15.

Die Reste R^{x} und R^{y} werden für jede der x (O-R^{x})-Einheiten und jede der y (O-CO-R^{y})-Einheiten unabhängig gewählt. Bevorzugt sind in einem Block aus (O-R^{x})-Einheiten die R^{x} in allen (O-R^{x})-Einheiten und in einem Block aus (O-CO-R^{y})-Einheiten die R^{y} in allen (O-CO-R^{y})-Einheiten identisch.

Beispiele für hydroxyfunktionelle (Meth)acrylate gemäß der obigen Formel sind zum Beispiel, aber nicht ausschließlich, die unter den Handelsnamen Placcel FA sowie Placcel FM bekannten Verbindungen der Firma Daicel Chemical Industries, die unter den Handelsnamen SR495B, SR399, SR444D und SR604 bekannten Verbindungen der Firma Sartomer oder die unter den Handelsnamen Blemmer AE, AP, E, P, PE, PP, oder PEP erhältlichen Verbindungen der Firma NOF Corporation.
Bevorzugt handelt es sich bei A^{z} um eine OH- oder NH₂-Gruppe.
Es ist weiterhin bevorzugt, dass z = 1.

Bei R^{z} handelt es sich um einen aliphatischen oder aromatischen Rest.

Bevorzugt handelt es sich für z = 1 bei R^{z} um einen Alkyl-, einen Alkenyl-, einen halogenierten Alkyl-, einen Aryl-, einen Arylalkyl-, einen Alkylaryl-, einen Polyester oder einen Polyetherrest.

Besonders bevorzugt handelt es für z = 1 bei R^{z} um einen halogenierten Alkylrest mit 1 bis 30 Kohlenstoffatomen, einen linearen Alkylrest mit 1 bis 30 Kohlenstoffatomen, einen verzweigten oder zyklischen Alkylrest mit 3 bis 30 Kohlenstoffatomen, einen linearen Alkenylrest mit 2 bis 30 Kohlenstoffatomen, einen verzweigten Alkenylrest mit 3 bis 30 Kohlenstoffatomen oder einen Arylrest mit 6 bis 30 Kohlenstoffatomen oder einen Alkylarylrest oder einen Arylalkylrest mit 7 bis 30 Kohlenstoffatomen.

Bevorzugt ist für z = 1 R^{z} nicht fluoriert. Besonders bevorzugt ist für z = 1 R^{z} nicht halogeniert.

Es ist ebenfalls bevorzugt, dass es sich bei R^{z} um einen aliphatischen Rest handelt, welcher Ether- und/oder Estergruppen enthält.

Beispiele für Verbindungen der Struktur (III) sind Butylalkohol, Oleylalkohol, Stearylalkohol, Benzylamin, Stearylamin, Oleylamin, hydroxyfunktionelle Polyether oder Polyester, wie zum Beispiel Monomethylpolyethylenglycol, Monobutylpolyethylenglycol, Monoallylpolyethylenglycol, Monopropenylpolyethylenglycol, Polyethylenglycol, Polypropylenglycol, Monoalkylpoly-ε-caprolacton oder Poly-ε-caprolacton.

Weiterhin ist m + n + x + y ≥ 3.

Bevorzugt ist weiterhin m + n + x + y ≥ 6 und m + n + x + y ≥ 10

Besonders bevorzugt ist 30 ≥ m + n + x + y ≥ 3. Ganz besonders bevorzugt ist 25 ≥ m + n + x + y ≥ 6.

Ebenfalls bevorzugt ist 20 ≥ m + n ≥ 1 und 13 ≥ x + y ≥ 1 oder 6 ≥ x + y ≥ 1.

Es ist weiterhin bevorzugt, dass m = 1 bis 20 und n = 0 beträgt. Besonders bevorzugt ist zudem m = 1 bis 5 und n = 0.

Es ist weiterhin bevorzugt, dass x = 1 bis 13 und y = 0 oder x = 0 und y = 1 bis 6. Ebenso bevorzugt sind zudem x = 0 und y = 2 bis 6.

Alle vorstehend genannten Bereiche für m und n beziehungsweise x und y können beliebig miteinander kombiniert werden.

Durch den Zusatz der Polyisocyanataddukte zu Beschichtungsmitteln, können schmutzabweisende, leicht zu reinigende, anti-adhäsive Oberflächen erzielt werden. Dabei führen die hydrophoben Silikonanteile zu den zu erzielenden Eigenschaften, während die (O-R^{m})-, (O-CO-Rⁿ)-, (O-R^{x})- und (O-CO-R^{y})-Einheiten zur Verträglichkeit beitragen, wobei allerdings der Anteil der hydrophoben Gruppen überwiegt, um einen schmutzabweisenden Effekt zu erzielen. Bevorzugt ist dementsprechend m + n + x + y < s. Besonders bevorzugt ist m + n + x + y < 1/2 · s.

Es ist weiterhin bevorzugt, dass die NCO-Gruppen des mindestens einen Polyisocyanats vollständig umgesetzt werden. Die Umsetzung der besagten NCO-Gruppen kann anhand des NCO-Gehaltes der Polyisocyanataddukte bestimmt werden. Unter einer vollständigen Umsetzung ist im Sinne der vorliegenden Anmeldung ein NCO-Gehalt von weniger als 5 Gew.-%, bevorzugt weniger als 3 Gew.-%, besonders bevorzugt weniger als 2 Gew.-% und ganz besonders bevorzugt weniger als 1 Gew.-% zu verstehen.

Die Im Folgenden bezeichneten molaren Verhältnisse beziehen sich allesamt auf die entsprechenden Verhältnisse der einzusetzenden Edukte.

Die jeweiligen Komponenten werden mit der Maßgabe eingesetzt, dass das molare Verhältnis des mindestens einen Polysiloxans der Struktur (I) und des mindestens einen (Meth)acrylats der Struktur (II) bezogen auf die in dem mindestens einen Polyisocyanat enthaltenen NCO-Gruppen beispielsweise 0,7 bis 1,2, bevorzugt 0,8 bis 1,15, besonders bevorzugt 0,9 bis 1,1 und ganz besonders bevorzugt 0,95 bis 1,05 beträgt. Weiterhin beträgt das molare Verhältnis der einen oder mehreren mit Isocyanaten reaktiven Verbindungen der Struktur (III) bezogen auf die in dem mindestens einen Polyisocyanat enthaltenen NCO-Gruppen beispielsweise 0 bis 0,6, bevorzugt 0 bis 0,3, besonders bevorzugt 0 bis 0,1 und ganz besonders bevorzugt 0 bis 0,05.

Es ist bevorzugt, dass keine mit Isocyanaten reaktive Verbindungen der Struktur (III) eingesetzt werden.

Das Polysiloxan der Struktur (I) und das (Meth)acrylat der Struktur (II) werden mit der Maßgabe eingesetzt, dass das molare Verhältnis zwischen dem mindestens einen Polysiloxan der Struktur (I) und dem mindestens einen (Meth)acrylat der Struktur (II) beispielsweise zwischen 0,01 und 0,6, bevorzugt zwischen 0,05 und 0,5, besonders bevorzugt zwischen 0,1 und 0,4 und ganz besonders bevorzugt zwischen 0,15 und 0,3 liegt.

Erfolgt eine Umsetzung mit mehreren mit Isocyanaten reaktiven Verbindungen der Struktur (III), so beträgt der Stoffmengenanteil an solchen mit Isocyanaten reaktiven Verbindungen der Struktur (III), für die z = 2 beträgt, bevorzugt weniger als 10 %, besonders bevorzugt weniger als 5 % und ganz besonders bevorzugt weniger als 1 % bezogen auf die Gesamtstoffmenge der mit Isocyanaten reaktiven Verbindungen der Struktur (III).

Es ist ebenfalls bevorzugt, dass nur solche mit Isocyanaten reaktive Verbindungen der Struktur (III) eingesetzt werden, für die z = 1 beträgt.

Die Polyisocyanataddukte besitzen in Tetrahydrofuran eine Löslichkeit von beispielsweise mindestens 5 g/l, bevorzugt mindestens 10 g/l, besonders bevorzugt mindestens 20 g/l und ganz besonders bevorzugt mindestens 30 g/l bei jeweils 20 °C.

Eine typische ganz besonders bevorzugte Ausführungsform der zur erfindungsgemäßen Verwendung einzusetzenden Polyisocyanataddukte besitzt beispielsweise die folgenden Merkmale:
- Die Struktur (I) betreffend ist t = 3 und s = 4 bis 200.
- Bei allen Resten R^{a}, R^{b}, R^{c}, R^{d} und R^{e} handelt es sich jeweils um einen Methylrest.
- Das Polysiloxan der Struktur (I) ist ausschließlich aus (O-R^{m})-Einheiten aufgebaut. Dabei handelt es sich bei allen R^{m} entweder ausschließlich um Ethylengruppen oder es handelt sich bei allen R^{m} entweder um einen Ethylen- oder Propylenrest. In beiden Fällen gilt m = 1 bis 20 und n = 0.
- A^{si} ist eine OH-Gruppe.
- Der R^{a}[SiR^{b}R^{c}O]SiR^{d}R^{e}-Rest des Polysiloxans der Struktur (I) besitzt ein gewichtsmittleres Molekulargewicht im Bereich von 500 bis 5000 g/mol.
- Bei dem Polyisocyanat handelt es sich bevorzugt um ein Isocyanurat mit drei NCO-Gruppen.
- Es werden bevorzugt genau ein oder genau zwei (Meth)acrylate der Struktur (II) eingesetzt. Wird genau ein (Meth)acrylat der Struktur (II) eingesetzt, so ist i = 1. Werden zwei (Meth)acrylate der Struktur (II) eingesetzt, so gilt für eines der besagten (Meth)acrylate i = 1 und für das andere i = 3, wobei der Anteil des (Meth)acrylats der Struktur (II) mit i = 3 im Bereich von 20 bis 30 mol-%, jeweils bezogen auf die Gesamtstoffmenge des (Meth)acrylats der Struktur (II) mit i = 1 und des (Meth)acrylats der Struktur (II) mit i = 3, liegt.
- Für i = 1 handelt es sich um bei R^{U} vorzugsweise um einen Ethylenrest.
- Für i = 3 handelt es sich bei (U-O-)ᵢ-R^{U}- vorzugsweise um einen entsprechenden Pentaerythritolrest.
- Die Struktur (II) besitzt entweder nur (O-R^{x})-Einheiten, wobei x =1 bis 13 oder ausschließlich (O-COR^{y})-Einheiten, wobei y = 1 bis 6.
- Bei allen Resten R^{x} handelt es sich um einen Ethylenrest.
- Bei allen Resten R^{y} handelt es sich um einen Pentamethylenrest.
- Es erfolgt keine weitere Umsetzung mit einer mit Isocyanaten reaktiven Verbindung der Struktur (III).
- Es werden alle Isocyanatgruppen des Polyisocyanats umgesetzt.
- Bevorzugt ist das molare Verhältnis zwischen dem mindestens einen Polysiloxan und dem mindestens einen (Meth)acrylat so gewählt, dass dieses zwischen 0,15 und 0,3 liegt.
- Bevorzugt wird jeweils nur ein Polysiloxan der Struktur (I), ein Isocyanurat mit drei NCO-Gruppen und ein (Meth)acrylat der Struktur (II) eingesetzt.
- Die Polyisocyanataddukte besitzen ein gewichtsmittleres Molekulargewicht im Bereich von 500 bis 60000 g/mol.

Die zur erfindungsgemäßen Verwendung eingesetzten Polyisocyanataddukte, erhältlich durch Umsetzung von
i. mindestens einem Polysiloxan, welches die Struktur (I) besitzt,
ii. mindestens einem Polyisocyanat mit mindestens drei NCO-Gruppen,
iii. mindestens einem (Meth)acrylat, welches die Struktur (II) besitzt,
iv. und optional einer oder mehren mit Isocyanaten reaktiven Verbindungen der Struktur (III),
können zum Beispiel durch Zusammengeben aller Komponenten auf einmal und anschließender Reaktion hergestellt werden. Es ist ebenfalls möglich zwei Komponenten miteinander zusammenzugeben und miteinander zur Reaktion zu bringen. Anschließend kann dann die Umsetzung mit weiteren Komponenten erfolgen.

Hierbei sind grundsätzlich alle denkbaren Abfolgen möglich. Bevorzugt wird zunächst das (Meth)acrylat mit dem Polyisocyanat umgesetzt und anschließend erfolgt die Umsetzung mit dem Polysiloxan und gegebenenfalls mit der mit Isocyanaten reaktiven Verbindung der Struktur (III). Es ist weiterhin bevorzugt, dass jeweils nur ein Polysiloxan der Struktur (I), ein Polyisocyanat mit mindestens drei NCO-Gruppen, und gegebenenfalls eine mit Isocyanaten reaktive Verbindung der Struktur (III) eingesetzt wird. Ebenso bevorzugt wird jeweils ein (Meth)acrylat der Struktur (II) mit i = 1 und gegebenenfalls ein weiteres (Meth)acrylat der Struktur (II) mit i > 1 eingesetzt.

In der Regel erhält man auf Grundlage einer wie oben dargestellten Umsetzung ein Gemisch aus Polyisocyanataddukten. Die resultierenden Polyisocyanataddukte weisen bezüglich ihrer Häufigkeit in dem resultierenden Gemisch eine statistische Verteilung auf. Die besagte Verteilung lässt sich zum Beispiel durch das Stoffmengenverhältnis der jeweiligen Komponenten beeinflussen. Ebenso spielt es eine Rolle in welcher Reihenfolge die einzelnen Komponenten miteinander zur Reaktion gebracht werden. Ein weiterer Einfluss auf die Zusammensetzung des resultierenden Gemischs ergibt sich daraus, dass eine oder mehrere Verbindungen einer bestimmten Komponente, also beispielsweise mehrere unterschiedliche Polysiloxane der Struktur (I), eingesetzt werden können.

Vorstellbar ist auch, dass gezielt ein bestimmtes Polyisocyanataddukt hergestellt wird. Dies soll im Folgenden exemplarisch an der Umsetzung von einem Isocyanurat mit drei NCO-Gruppen mit jeweils einem Polysiloxan der Struktur (I) und einem (Meth)acrylat der Struktur (II) veranschaulicht. werden. Zunächst wird ein Äquivalent eines Polysiloxans der Struktur (I) zu einem Überschuss des Isocyanurats mit drei NCO-Gruppen hinzugetropft. Hierdurch entsteht ein Addukt aus einem entsprechenden Isocyanurat mit genau einem Polysiloxans der Struktur (I). Das überschüssige Isocyanurat wird abgetrennt. Die verbliebenen NCO-Gruppen können nun mit einem (Meth)acrylat der Struktur (II) umgesetzt werden. Man erhält somit ein Isocyanurat, dessen eine NCO-Gruppe mit einem Polysiloxan der Struktur (I) und dessen andere beiden NCO-Gruppen jeweils mit einem (Meth)acrylat der Struktur (II) umgesetzt wurden.

Es ist also durch eine entsprechende Reaktionsführung grundsätzlich möglich, gezielt einzelne Polyisocyanataddukte zu synthetisieren.
Die Herstellung der Polyisocyanataddukte erfolgt gegebenenfalls in Anwesenheit eines oder gegebenenfalls mehrerer Katalysatoren, bevorzugt bei 0°C bis 100°C, vorzugsweise bei etwa 20°C bis 85°C.

Als Katalysatoren zur Herstellung der Polyisocyanataddukte sind beispielsweise tert. Amine, wie Triethylamin, Triethylendiamin, N-Methyl-pyridin und N-Methyl-morpholin, Metallsalze, wie Zinnoctoat, Bleioctoat und Zinkstearat, und organische Metallverbindungen, wie Dibutylzinndilaurat, geeignet.

Die Herstellung der zur erfindungsgemäßen Verwendung der Polyisocyanataddukte erfolgt gegebenenfalls in Anwesenheit eines Inhibitors der radikalischen Polymerisation. Als Inhibitoren der radikalischen Polymerisation sind beispielsweise Hydrochinon, Hydrochinonmonomethylether, 4-Hydroxy-2,2,6,6-tetramethyl-1-piperidinyloxy (4-Hydroxy-TEMPO) oder Phenothiazine geeignet. Der Inhibitor der radikalischen Polymerisation wird eingesetzt, um freie Radikale abzufangen, die sich möglicherweise während der thermisch unterstützten Urethanbildung oder bei der Lagerung der Makromonomere bilden, so dass die Stabilität des (Meth)acrylats gewährleistet ist. Ein Vorteil bei der Verwendung eines Inhibitors der radikalischen Polymerisation liegt somit darin, dass die Reaktionsführung erleichtert wird und weniger Nebenprodukte wie Homooligomere oder Homopolymere anfallen.

Es können Lösemittel verwendet werden. Diese dürfen die Bildung der Isocyanataddukte jedoch nicht beeinflussen. Geeignete Lösemittel sind beispielsweise solche, die keine aktiven Wasserstoffatome enthalten, die mit der Isocyanatgruppe reagieren könnten.

Als aktiver Wasserstoff wird der an N, O oder S gebundene sogenannte aktive Wasserstoff von Carboxy-, Hydroxy-, Amino u. Imino- sowie Thiolgruppen bezeichnet. Der aktive Wasserstoff lässt sich nach einem von Tschugaeff und Zerewitinoff entwickelten Verfahren durch Umsetzung mit Methylmagnesiumbromid in Butyl- oder anderen Ethem bestimmen (vgl.: RÖMPP Chemie Lexikon, Georg Thieme Verlag, Germany, 1998, "Aktiver Wasserstoff Seite 81). Vorzugsweise werden aliphatische, cycloaliphatische, aromatische Lösemittel, Ketone und cyclische Ether, als Lösemittel eingesetzt. Die Wahl des Lösemittels richtet sich auch nach dem späteren Einsatzzweck des im Anschluss aus den Makromonomeren zu synthetisierenden Polyisocyanataddukts. Bevorzugt werden Lösemittel mit einem Siedepunkt <150°C, besonders bevorzugt <100°C, eingesetzt, um das Abdestillieren zu erleichtern.

Am Ende der Reaktion wird das Produkt abgekühlt. Lösemittel und Polymerisationsinhibitoren können bei Bedarf vor der nachfolgenden radikalischen Copolymerisation durch geeignete Destillations- oder Filtrationsmaßnahmen entfernt werden.

Das gewichtsmittlere Molekulargewicht der zur erfindungsgemäßen Verwendung eingesetzten Polyisocyanataddukte liegt bevorzugt im Bereich von 500 bis 60000 g/mol besonders bevorzugt von 1000 bis 30000 g/mol und ganz besonders bevorzugt von 3000 bis 20000 g/mol. Das gewichtsmittlere Molekulargewicht der Polyiocyanataddukte wird mittels Gelpermeationschromatographie mit Tetrahydrofuran als Elutionsmittel und unter Verwendung von Polystyrol-Standards bestimmt. Das Säulenmaterial besteht aus Styrol-Divinylbenzol-Copolymeren.

Eine Möglichkeit zur Herstellung linearer, monofunktioneller Polysiloxane ist die Äquilibrierung zyklischer und offenkettiger Polydialkylsiloxane mit endständig difunktionellen Polysiloxanen, wie zum Beispiel endständigen -SiH oder -NH₂ difunktionellen Polydialkylsiloxanen, oder sogenannten funktionellen Blockern, wie bei Noll (Chemie und Technologie der Silicone, VCH, Weinhelm, 1984) und Yigör, I. und McGrath, J. E. (Polysiloxane Containing Copolymers: A Survey of Recent Development; Advances in Polymer Science; Springer-Verlag: New York, 1988; Vol. 86) beschrieben. Aus statistischen Gründen besteht das Reaktionsprodukt aus einer Mischung zyklischer, difunktioneller, monofunktioneller und nicht funktioneller Polysiloxane. Der Anteil an linearen Polysiloxanen im Reaktionsgemisch kann durch eine destillative Entfernung der niederen Zyklen erhöht werden. Innerhalb der linearen Polysiloxane sollte der Anteil monofunktioneller Polysiloxane im Reaktionsprodukt der Äquilibrierung möglichst hoch sein. Je nach Verhältnis der Edukte bei der Synthese der erfindungsgemäßen Polymeren können difunktionelle Polysiloxane zur Vernetzung führen und je nach Anwendung können nicht funktionelle Polysiloxane zu Trübungen und Unverträglichkeiten führen.

Im Rahmen der vorliegenden Erfindung werden streng mono-SiH-funktionelle Polysiloxane eingesetzt, das heißt solche, die nur eine Si-H-Gruppe aufweisen. Die Synthese dieser linearen monofunktionellen Polysiloxane kann beispielsweise über eine lebende anionische Polymerisation zyklischer Polysiloxane, zum Beispiel Hexamethylencyclotrisiloxan, erfolgen. Dieses Verfahren ist unter anderem bei T. Suzuki in Polymer, 30 (1989) 333 beschrieben. Die Reaktion wird beispielhaft in folgendem Reaktionsschema dargestellt:

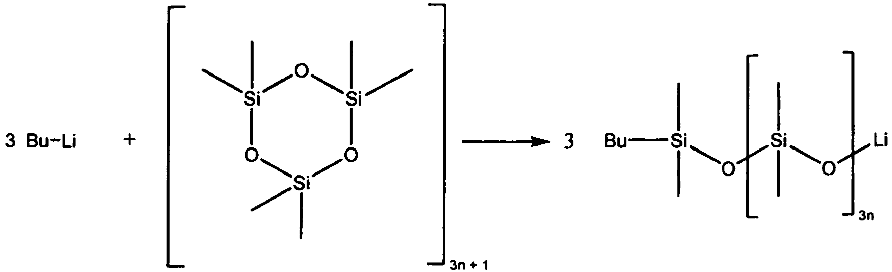

Die SiHMe₂-Funktionalisierung der Endgruppe kann mit funktionellen Chlorsilanen, beispielsweise Dimethylchlorsilan, analog dem folgenden Reaktionsschema nach dem, dem Durchschnittsfachmann bekannten Verfahren, erfolgen.

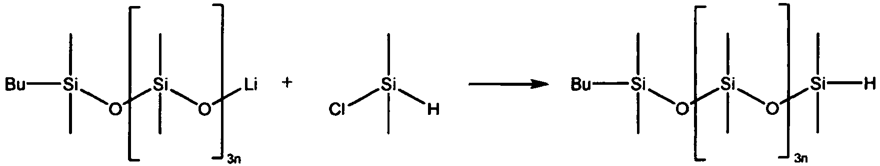

Die mono-SiH-funktionellen Polysiloxane werden in einer Hydrosilylierungsreaktion mit einer (endständigen) ethylenisch ungesättigten Hydroxyverbingung, wie allylischen oder vinylischen Hydroxyverbingungen, zu monohydroxyfunktionellen modifizierten Polysiloxanen umgesetzt. Die Hydrosilylierung kann auf eine dem Fachmann bekannte Weise durchgeführt werden. Im Folgenden ist das exemplarisch für einen hydroxyfunktionellen Allylpolyether beschrieben.

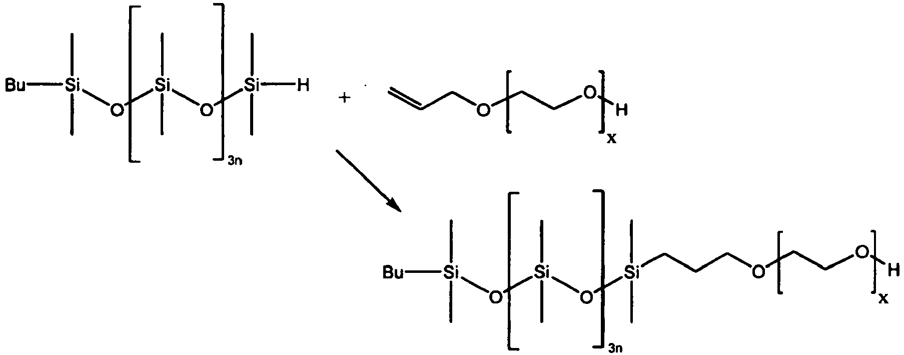

Die Hydrosilylierung wird typischerweise in der Gegenwart eines Katalysators, wie beispielsweise eines Platin-, Rhodium-, Ruthenium-, oder Palladium-Komplexes oder ähnlicher Verbindungen beziehungsweise den entsprechenden reinen Elementen oder deren auf Silica, Aluminiumoxid oder Aktivkohle oder ähnlichen Trägermaterialien immobilisierten Derivaten durchgeführt. Bevorzugt wird die Hydrosilylierung in Gegenwart von Pt-Katalysatoren wie Cis-Platin, Speyers- oder Karstedt-Katalysator durchgeführt. Gegebenenfalls wird die Reaktion gepuffert, um Nebenreaktionen mit der Hydroxygruppe zu vermeiden. Wegen der möglichen Allyl-Propenyl-Umlagerung während der Reaktion wird gegebenenfalls ein Überschuss des Allylpolyethers im Vergleich zum SiH-funktionellen Polysiloxan eingesetzt.

Vorzugsweise beträgt die eingesetzte Menge an Katalysator 10⁻⁷ bis 10⁻¹ mol pro mol Olefin beziehungsweise pro mol endständiger Kohlenstoff-Kohlenstoff-Doppelbindung, bevorzugt 1 bis 100 ppm bezogen auf die Stoffmenge der Komponente mit endständiger Kohlenstoff-Kohlenstoff-Doppelbindung. Die Hydrosilylierung wird vorzugsweise bei Temperaturen von 0 und 200 °C, bevorzugt von 20 bis 120 °C, durchgeführt.

Die Hydrosilylierung kann in Gegenwart oder in Abwesenheit von Lösemitteln durchgeführt werden. Geeignete Lösemittel sind beispielsweise aliphatische oder aromatische Kohlenwasserstoffe, cyclische Oligosiloxane, aliphatische oder cyclische Ether oder Alkohole. Insbesondere geeignet sind Cyclohexan, Xylol oder Toluol.

Der Ablauf der Reaktion kann durch eine gasvolumetrische Bestimmung der verbleibenden SiH-Gruppen oder durch Infrarot-Spektroskopie (Absorptionsbande des Siliciumhydrids bei 2150 cm⁻¹) verfolgt werden.

Die zur erfindungsgemäßen Verwendung eingesetzten Polyisocyanataddukte können zum Beispiel als Verlaufmittel in Beschichtungsmitteln eingesetzt werden, um beispielsweise die optischen Eigenschaften der resultierenden Beschichtung zu verbessern. Durch die erfindungsgemäße Verwendung der Polyisocyanataddukte als Verlaufmittel kann beispielsweise auch der Glanz und/oder die Opaleszenz der Beschichtungsmittel beziehungsweise Beschichtungen verbessert werden. Die Verwendung der Polyisocyanataddukte führt ebenfalls zu einer Verringerung der Kraterbildung sowie einer Verbesserung der Gleiteigenschaften der resultierenden Beschichtung. Zudem wird die erfindungsgemäße Verwendung der Polyisocyanataddukte zur Vermeidung von Trübungen eingesetzt.

Durch den Zusatz der Polyisocyanataddukte zu Beschichtungsmitteln, können schmutzabweisende, leicht zu reinigende, anti-adhäsive Oberflächen erzielt werden. In den Polyisocyanataddukten führen die hydrophoben Silikonanteile zu den zu erzielenden Eigenschaften, während die (O-R^{m})-, (O-CO-Rⁿ)-, (O-R^{x})- und (O-CO-R^{y})-Einheiten zur Verträglichkeit in der Beschichtungsmittelzusammensetzung beitragen, wobei allerdings der Anteil der hydrophoben Gruppen überwiegt, um einen schmutzabweisenden Effekt zu erzielen.

Durch die mit Isocyanaten reaktive Verbindung der Struktur (III) lassen sich durch eine entsprechende Wahl des Restes R^{z} weitere hydrophobe Gruppen einführen. Dies führt üblicherweise auch zu einer drastischen Verminderung der Oberflächenenergie und beeinflusst somit ebenfalls den schmutzabweisenden Effekt der resultierenden Oberfläche.

Ebenso kann die Verträglichkeit hinsichtlich der Beschichtungsmittelzusammensetzung durch solche Reste R^{z} beeinflusst werden, bei denen es sich um einen aliphatischen Rest handelt, welcher Ether- und/oder Estergruppen enthält.

Beschichtungsmittel, denen die Polyisocyanataddukte zugesetzt werden, weisen ausgezeichnete anti-adhäsive und schmutzabweisende Eigenschaften auf. Solche Beschichtungsmittelzusammensetzungen sind vorzugsweise Zusammensetzungen zur Herstellung von Antigraffiti-Beschichtungen, Trennbeschichtungen, selbstreinigenden Fassadenbeschichtungen, eisabweisenden Beschichtungen, zum Beispiel für Flugzeuge, Autoreifenbeschichtungen, Schmutz abweisenden Maschinen- beziehungsweise Instrumentenbeschichtungen, marinen Beschichtungen (Anti-Fouling-Beschichtungen) und schmutzabweisenden Möbelbeschichtungen und Trennpapierbeschichtungen. Aufgrund des außergewöhnlich guten anti-adhäsiven Effekts der Beschichtungsmittelzusammensetzungen der vorliegenden Erfindung können selbst ölige Substanzen, wie beispielsweise Mineralöle, Gemüseöle oder ölige Präparationen, abgestoßen werden, so dass entsprechend beschichtete Behälter komplett von diesen Flüssigkeiten entleerbar sind. Dementsprechend sind die Beschichtungsmittelzusammensetzungen, welche entsprechend mit den Polyisocyanataddukten versehen wurden, geeignet, Doseninnenflächen zu beschichten beziehungsweise Behälterinnenflächen zu beschichten. Darüber hinaus sind aufgrund der außerordentlich breiten Kompatibilität der zur erfindungsgemäßen Verwendung der Polyisocyanataddukte diese auch zur Herstellung transparenter Beschichtungsmittel geeignet.

Die Polyisocyanataddukte beeinträchtigen die anderen Eigenschaften, wie zum Beispiel Wetterbeständigkeit oder mechanische Beständigkeit, der Beschichtungsmittel beziehungsweise Beschichtungen nicht negativ. Dabei werden die zur erfindungsgemäßen Verwendung eingesetzten Polyisocyanataddukte den Beschichtungsmitteln erfindungsgemäß in relativ geringen Mengen von 0,01 bis 5 Gew.%, bevorzugt von 0,02 bis 2 Gew.-% und besonders bevorzugt von 0,03 bis 1 Gew.-%, jeweils bezogen auf die gesamte Zusammensetzung des Beschichtungsmittels zugesetzt werden.

Die physikalischen Eigenschaften der ursprünglichen Beschichtungsmittel beziehungsweise Beschichtungen, beispielsweise in Bezug auf Korrosionsschutz, Glanzerhaltung und Witterungsbeständigkeit, werden durch die geringen Konzentrationen der Polyisocyanataddukte nicht beeinträchtigt. Beschichtungsmittel beziehungsweise Beschichtungen, die die Polyisocyanataddukte enthalten, zeigen die gewünschten Eigenschaften in der Regel auch über einen Zeitraum von mehreren Jahren hinweg und behalten diese Eigenschaften auch über mehrere Reinigungszyklen hinweg bei.
Die Polyisocyanataddukte enthalten (Meth)acrylatgruppen und können mit entsprechenden α,β-ethylenisch ungesättigten Gruppen des Bindemittels reagieren. Dementsprechend ist eine dauerhafte Einbettung in die resultierende Beschichtung und somit ein dauerhafter Effekt durch die Polyisocyanataddukte gewährleistet.

Ein weiterer Gegenstand der vorliegenden Erfindung ist daher eine strahlenhärtbare Beschichtungsmittelzusammensetzung, welche
(a) mindestens ein strahlenhärtbares Polymer als Bindemittel und
(b) mindestens ein Polyisocyanataddukt, erhältlich durch die Umsetzung von
   i. mindestens einem Polysiloxan, welches die folgende Struktur (I) besitzt 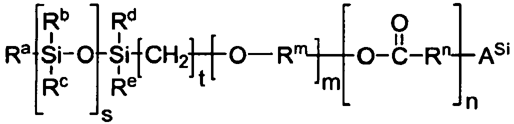
      wobei t = 2 bis 30, m = 0 bis 100, n = 0 bis 100, s = 1 bis 400,
      R^{a} für einen halogenierten Alkylrest mit 1 bis 30 Kohlenstoffatomen, einen linearen Alkylrest mit 1 bis 30 Kohlenstoffatomen, einen verzweigten oder zyklischen Alkylrest mit 3 bis 30 Kohlenstoffatomen oder einen Arylrest mit 6 bis 30 Kohlenstoffatomen oder einen Alkylarylrest oder einen Arylalkylrest mit 7 bis 30 Kohlenstoffatomen steht,
      alle R^{b}, R^{c}, R^{d} und R^{e} unabhängig voneinander für lineare Alkylreste mit 1 bis 6 Kohlenstoffatomen, verzweigte oder zyklische Alkylreste mit 3 bis 6 Kohlenstoffatomen oder Arylreste mit 6 bis 12 Kohlenstoffatomen oder Alkylarylreste oder Arylalkylreste mit 7 bis 12 Kohlenstoffatomen stehen,
      R^{d} und R^{e} zudem unabhängig voneinander für R^{a}[SiR^{b}R^{c}O]ₛ stehen können, wobei R^{a}, R^{b}, R^{c} und s wie oben definiert sind und unabhängig davon ausgewählt sind,
      die m (O-R^{m})-Einheiten und die n (O-CO-Rⁿ)-Einheiten in der Struktureinheit [O-R^{m}]ₘ-[O-CO-Rⁿ]ₙ in beliebiger Reihenfolge angeordnet sind,
      R^{m} für einen linearen Alkylenrest mit 2 bis 4 Kohlenstoffatomen oder einen verzweigten Alkylenrest mit 3 oder 4 Kohlenstoffatomen steht,
      Rⁿ für einen linearen Alkylenrest mit 2 bis 6 Kohlenstoffatomen oder einen verzweigten Alkylenrest mit 3 bis 6 Kohlenstoffatomen oder einen zyklischen Alkylenrest mit 3 bis 6 Kohlenstoffatomen steht,
      die Reste R^{m} und Rⁿ für jede der m (O-R^{m})-Einheiten und jede der n (O-CO-Rⁿ)-Einheiten unabhängig gewählt werden,
      und es sich bei A^{Si} um eine OH-, NH₂- oder CO₂H-Gruppe handelt;
   ii. mindestens einem Polyisocyanat mit mindestens drei NCO-Gruppen,
   iii. mindestens einem (Meth)acrylat, welches die folgende Struktur (II) besitzt: 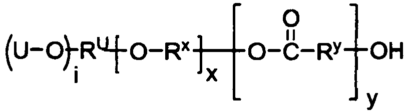
      wobei x = 0 bis 100, y = 0 bis 100,
      U für eine der folgenden Gruppen steht: 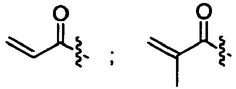
      R^{U} für einen (i+1)-bindigen organischen Rest mit i = 1 bis 5 steht,
      die x (O-R^{x})-Einheiten und die y (O-CO-R^{y})-Einheiten in der Struktureinheit [O-R^{x}]ₓ-[O-CO-R^{y}]_{y} in beliebiger Reihenfolge angeordnet sind,
      R^{x} für einen linearen Alkylenrest mit 2 bis 4 Kohlenstoffatomen oder einen verzweigten Alkylenrest mit 3 oder 4 Kohlenstoffatomen steht,
      R^{y} für einen linearen Alkylenrest mit 2 bis 6 Kohlenstoffatomen oder einen verzweigten Alkylenrest mit 3 bis 6 Kohlenstoffatomen oder einen zyklischen Alkylenrest mit 3 bis 6 Kohlenstoffatomen steht, die Reste R^{x} und R^{y} für jede der x (O-R^{x})-Einheiten und jede der y (O-CO-R^{y})-Einheiten unabhängig gewählt werden, und
   iv. optional einer oder mehrerer mit Isocyanaten reaktiven Verbindungen der Struktur (III), welche von den unter i bis iii eingesetzten Komponenten verschieden ist:
      R^{z}-(A^{z})_{z} ; mit z = 1 oder 2
      wobei R^{z} für einen aliphatischen oder aromatischen Rest steht und es sich bei A^{z} um eine OH-, NH₂- oder CO₂H-Gruppe handelt,
      und m + n + x + y ≥ 3 ist,
      in einer Menge von 0,01 bis 5 Gew.-%, wobei sich die gewichtsprozentuale Angabe auf die Gesamtformulierung der strahlenhärtbaren Beschichtungsmittelzusammensetzung bezieht, enthält.

Sofern nichts anderes angegeben ist, beziehen sich die im Folgenden genannten gewichtsprozentualen Angaben auf die Gesamtformulierung der strahlenhärtbaren Beschichtungsmittelzusammensetzung.

Die Polyisocyanate fallen bei ihrer Herstellung in der Regel als Gemisch an. Bevorzugt wird das erhaltene Gemisch aus Polyisocyanataddukten direkt in einer entsprechenden strahlenhärtbaren Beschichtungsmittelzusammensetzung eingesetzt.

Unter Strahlenhärtung wird ein Prozess verstanden, bei dem eine chemische Reaktion in Abhängigkeit von der Wellenlänge oder der aufgenommenen Elektronenenergie abläuft. Für solche Prozesse werden Elektronenstrahlen oder UV-Strahlen verwendet. Ergänzend sei hier auf Römpp Lexikon Lacke und Druckfarben, Georg Thieme Verlag, Stuttgart, New York, 1998, "Strahlenhärtung" Seiten 543 und 544 verwiesen.

Der erste Bestandteil der erfindungsgemäßen Beschichtungsmittelzusammensetzung ist ein strahlenhärtendes Polymer als Bindemittel. Es handelt sich bei Polymeren um Mischungen von verschieden großen Molekülen, wobei sich diese Moleküle durch eine Abfolge von gleichen oder verschiedenen organischen Monomereinheiten (als reagierte Form von organischen Monomeren) auszeichnen. Während einem bestimmten organischen Monomer eine diskrete Molekülmasse zuzuordnen ist, ist ein Polymer also immer eine Mischung von Molekülen, die sich in ihrer Molekülmasse unterscheiden. Ein Polymer kann daher nicht durch eine diskrete Molekülmasse beschrieben werden, sondern ihm werden immer mittlere Molekülmassen, nämlich eine zahlenmittlere (Mₙ) und eine gewichtsmittlere (M_{w}) Molekülmasse, zugeordnet. Bekanntermaßen müssen die beschriebenen Eigenschaften definitionsgemäß immer zu der Beziehung M_{w} größer Mₙ führen beziehungsweise die Polydispersität (M_{w}/Mₙ) ist immer größer 1. Es handelt sich also beispielsweise um die an sich bekannten Polyadditions-, Polykondensations- und/oder Polymerisationsharze.

Als strahlenhärtbares Polymer können (meth)acrylfunktionelle (Meth)acrylatcopolymere, Polyetheracrylate, Polyesteracrylate, ungesättigte Polyester, Epoxyacrylate, Urethanacrylate, Aminoacrylate, Melaminacrylate und die entsprechenden Methacrylate verwendet werden. Bevorzugt werden Urethan(meth)acrylate und Polyester(meth)acrylatharze eingesetzt.
Das strahlenhärtbare Polymer wird bevorzugt in Mengen von 30 bis 99 Gew.-%, besonders bevorzugt von 30 bis 90 Gew.-% und ganz besonders bevorzugt von 45 bis 80 Gew.-% eingesetzt.

Das mindestens eine Polyisocyanataddukt (b) wird in Mengen von bevorzugt 0,01 bis 5 Gew.-%, besonders bevorzugt von 0,02 bis 2 Gew.-% und ganz besonders bevorzugt von 0,03 bis 1 Gew.-% eingesetzt.

Die strahlenhärtbare Beschichtungsmittelzusammensetzung kann zudem mindestens einen Reaktiwerdünner enthalten.

Gemäß DIN 55945 werden als Reaktiwerdünner beziehungsweise reaktives Lösemittel all jene Lösemittel bezeichnet, die bei der Härtung durch chemische Reaktion weitgehend Bestandteil der Beschichtung werden. An dieser Stelle sei auch auf Römpp Lexikon Lacke und Druckfarben, Georg Thieme Verlag, Stuttgart, New York, 1998, "Reaktivverdünner" Seiten 491 und 492 verwiesen. Im vorliegenden Fall sollen strahlenhärtbare Reaktiwerdünner eingesetzt werden. Solche strahlenhärtbaren Reaktiwerdünner enthalten insbesondere Acrylat-, Methacrylat- und/oder Vinylgruppen. Als dem Fachmann bekannte Beispiele für derartige Reaktiwerdünner werden die Folgenden genannt: Butylacrylat, (2-Ethylhexyl)acrylat, Laurylacrylat, n-Hexylacrylat, (2-Phenoxyethyl)acrylat, Isobomylacrylat, Dipropylenglykol-diacrylat, Tripropylenglykol-diacrylat, 1,6-Hexandiol-diacrylat, Pentaerythrit-tri oder tetraacrylat, Trimethylolpropan-O,O',O"-triethanol-triacrylat, Trimethylolpropan-triacrylat, Ethyltriglykol-methacrylat, Furfuryl-methacrylat, (2-Hydroxyethyl)methacrylat, (2-Hydroxypropyl)methacrylat, Laurylmethacrylat, Tetrahydrofurfuryl-methacrylat, Allylmethacrylat, 1,3-Butandiol-dimethacrylat, 1,4-Butandiol-dimethacrylat, Diethylenglykol-dimethacrylat, Glycidylmethacrylat, 1,6-Hexandiol-dimethacrylat, Triethylenglykol-dimethacrylat, Trimethylolpropantrimethacrylat, Ethyldiglykolacrylat, (4-*tert*-Butylcyclohexyl)acrylat, *N-*Vinylcaprolactam, *N*-Vinylpyrrolidon, Vinylpropionat, Bisphenol-A-dimethacrylat, Dianoldiacrylat, 1,12-Dodecandioldimethacrylat, *N,N'*Divinyl-*N,N'*ethylenhamstoff, Ethylenglykoldimethacrylat, Octadecyldiacrylat, Polyethylenglykol-n-dimethacrylat, Dihydrodicyclopentadienylacrylat, Ethylvinylether, n-Propylvinylether, Isopropylvinylether, *n*-Butylvinylether, Isobutylvinylether, Octadecylvinylether, Cyclohexylvinylether, 1,4-Butandiol-divinylether, 1,4-Butandiol-monovinylether, 1,4-Cyclohexandimethanol-divinylether, 1,4-Cyclohexandimethanol-monovinylether, Diethylenglykol-divinylether, Triethylenglykol-divinylether.

Es können auch Reaktiwerdünner eingesetzt werden, die außer einer reaktiven Doppelbindung eine oder mehrere andere reaktive Gruppen tragen. Als dem Fachmann bekannte Beispiele für derartige Reaktiwerdünner seien die Folgenden genannt: Allylglycidylether, Diallyphthalat, Polyolmonohydroxytriacrylat, (2-Hydroxyethyl)acrylat, (2-Hydroxypropyl)acrylat, (2-Hydroxyethyl)acrylat-phosphat, (2-Hydroxyethyl)methacrylat-phosphat, Diurethandimethacrylat, [2-(*tert-*Butylamino)ethyl]-methacrylat, *N*-(Isobutoxymethyl)acrylamid.

Der mindestens eine strahlenhärtbare Reaktiwerdünner wird in Mengen von 0 bis 65 Gew.-%, bevorzugt 20 bis 62 Gew.-%, besonders bevorzugt von 35 bis 60 Gew.-% und ganz besonders bevorzugt von 40 bis 55 Gew.-% eingesetzt.

Die strahlenhärtbare Beschichtungsmittelzusammensetzung enthält gegebenenfalls ein organisches oder anorganisches nicht strahlenhärtendes Lösemittel. Als anorganisches Lösemittel kann beispielsweise Wasser eingesetzt werden. Bevorzugt werden organische Lösemittel verwendet. Als organische Lösemittel kommen die typischen, dem Fachmann bekannten organischen Lösemittel, beispielsweise aliphatische, cycloaliphatische, aromatische Lösemittel, typische Alkohole, Ether, Ester und/oder Ketone wie beispielsweise Ethanol, Isopropanol, Butanol, Butylglykol, Butyldiglykol, Butylacetat, Methylisobutylketon, Methylethylketon, Xylol, Toluol, Shellsol A, Solvesso-Produkte, zum Einsatz.

Die strahlenhärtbare Beschichtungsmittelzusammensetzung kann ebenfalls lösemittelbasierend sein. Als lösemittelbasierend gilt im Rahmen der vorliegenden Erfindung eine Beschichtungsmittelzusammensetzung, die nicht mehr als 10 Gew.-%, bevorzugt nicht mehr als 5 Gew.-%, insbesondere bevorzugt nicht mehr als 2 Gew.-% Wasser, bezogen auf die Gesamtmenge an Lösemitteln enthält.

Die strahlenhärtbare Beschichtungsmittelzusammensetzung kann weiterhin einen oder mehrere Photoinitiatoren enthalten.

Als Photoinitiatoren werden Additve in strahlenhärtbaren Systemen bezeichnet, die infolge Absorption ultravioletter oder sichtbarer Strahlung reaktive Zwischenprodukte bilden, die eine Polymerisationsreaktion auslösen können. An dieser Stelle sei auch auf Römpp Lexikon Lacke und Druckfarben, Georg Thieme Verlag, Stuttgart, New York, 1998, "Photoinitiatoren" Seiten 444 bis 446 verwiesen.

Als dem Fachmann bekannte Beispiele für Photoinitiatoren seien die Folgenden genannt: 2,2-Dimethoxy-1,2-diphenyl-ethanon, (1-Hydroxycyclohexyl)phenylmethanon, 2-Hydroxy-2-methyl-1-phenyl-1-propanon, 2-Hydroxy-1-[4-(2-hydroxyethoxy)-phenyl]-2-methyl-1-propanon, 2-Benzyl-2-dimethylamino-1-(4-morpholinophenyl)-1-butanon, 2-Methyl-1-[4-(methylthio)phenyl]-2-morpholino-1-propanon, α,α-Diethoxyacetophenon, Diphenyl-(2,4,6-trimethylbenzoyl)-phosphinoxid, Bis(2,6-dimethoxybenzoyl)-(2,4,4-trimethylpentyl)phosphinoxid, 1-Phenyl-1,2-propandion-2-[O-(ethoxycarbonyl)-oxim], Bis(η⁵-cyclopentadienyl)bis[2,6-difluoro-3-(1*H*-1-pyrrol-1-yl)-phenyl]titan, 2-Isopropylthioxanthon, 1,2-Diphenyl-2-(*p*-tolylsulfonyloxy)ethanon.

Sind ein oder mehrere Photoinitiatoren enthalten, so werden sie in einer Gesamtmenge von 0,5 bis 5 Gew.-%, bevorzugt 1 bis 4,5 Gew.-% und ganz besonders bevorzugt 2 bis 4 Gew.-% eingesetzt.

Die erfindungsgemäße Beschichtungsmittelzusammensetzung kann weiterhin mindestens einen UV-Absorber enthalten. Unter dem Begriff UV-Absorber versteht man eine Klasse von Lichtschutzmitteln, die Lacken oder Kunststoffen zum Schutz gegen den schädlichen Einfluss von UV-Licht im Bereich von 290 bis 400 nm zugegeben werden. Die wichtigsten UV-Absorber-Klassen sind 2-(2-Hydroxyphenyl)2H-benzotriazole, (2-Hydroxyphenyl)-s-triazine, Hydrobenzophenone und Oxalanilide. An dieser Stelle sei zudem auf Römpp-Lexikon Lacke und Druckfarben Georg Thieme Verlag, Stuttgart, New York, 1998, "UV-Absorber" Seiten 593 und 594 verwiesen.

Zudem kann die im Rahmen der vorliegenden Verwendung einzusetzende strahlenhärtbare Beschichtungsmittelzusammensetzung noch Pigmente oder Füllstoffe enthalten. Die Auswahl solcher Pigmente oder Füllstoffe kann vom Fachmann je nach den Anforderungen des Einzelfalls ausgewählt werden. Ergänzend sei beispielsweise auf Römpp-Lexikon "lacke und Druckfarben", Georg Thieme Verlag, Stuttgart, New York, 1998, Seiten 250 bis 252 sowie 451 bis 453 verwiesen.

Die strahlenhärtbare Beschichtungsmittelzusammensetzung kann weiterhin Entlüftungsmittel, Entschäumer, Emulgatoren, Netz- und Dispergiermittel, Haftvermittler, filmbildende Hilfsmittel, rheologiesteuernden Additive (Verdicker), Flammschutzmittel, Sikkative, Trockungsmittel, Hautverhinderungsmittel, Korrosionsinhibitoren, Wachse, Mattierungsmittel und weitere dem Fachmann bekannte Zusatzstoffe enthalten. Solche Zusatzstoffe können vom Fachmann nach den Anforderungen des Einzelfalls auf Basis seines Fachwissens ausgewählt und in den üblichen und bekannten, wirksamen Mengen eingesetzt werden.

Im Folgenden soll die Erfindung anhand konkreter Beispiele näher erläutert werden. Hierzu sollen zunächst die verwendeten Messverfahren beschrieben werden.

### Messverfahren:

### Gewichtsmittleres Molekulargewicht (M_{w})

Die Bestimmung des M_{w} erfolgte mittels Gelpermeationschromatographie mit Tetrahydrofuran als Elutionsmittel und unter Verwendung von Polystyrol-Standards. Das Säulenmaterial besteht aus Styrol-Divinylbenzol-Copolymeren.

### NCO-Gehaltsbestimmung

Der NCO-Gehalt wird durch Umsetzung der NCO-Gruppen (Isocyanate) mit einem Dibutylaminüberschuß zu Harnstoffderivaten und anschließender Rücktitration des überschüssigen Amins mit HCl quantitativ bestimmt. Der NCO-Gehalt gibt den Gehalt an Isocyanat in Gew.-% an.

### Hydroxyzahlbestimmung

Alkoholische Hydroxygruppen werden durch Acetylierung mit einem Überschuss Essigsäureanhydrid umgesetzt. Anschließend wird das überschüssige Essigsäureanhydrid durch Wasserzugabe zur Essigsäure aufgespalten und die gesamte Essigsäure mit ethanolischer KOH zurücktitriert. Die OH-Zahl gibt die Menge KOH in mg an, die der bei der Acetylierung von 1g Substanz gebundenen Menge Essigsäure äquivalent ist.

### Festkörperbestimmung

Ca. 2 g Probe werden in eine vorher getrocknete Aluminiumschale eingewogen und 10 Minuten bei 150°C im Trockenschrank getrocknet, im Exsikkator abgekühlt, und dann zurückgewogen. Der Rückstand entspricht dem Festkörperanteil.

### Synthesebeispiele

### Beispiel 1: Monohydroxyfunktionelles polyethermodifiziertes Polydimethylsiloxan

In einem mit Rührer, Thermometer, Tropftrichter, Rückflusskühler und Stickstoffeinleitungsrohr versehenen Vierhalskolben werden Monoallylpolyethylenglykol (147 g, Mn ≈ 480 g/mol) und Karstedt Katalysator (4 g, 0,2%ige Anlösung in Xylol) vorgelegt und auf 60 °C erhitzt. Die Zudosierung eines mono-SiH-funktionellen Polydimethylsiloxans (500 g, Mn = 2000 g/mol) erfolgt in der Art, dass die Temperatur 70 °C nicht überschreitet. Die Umsetzung des mono-SiH-funktionellen Polysiloxans wird mittels gasvolumetrischer Bestimmung verfolgt. Die gemessene Hydroxyzahl des Produktes beträgt 28,1 mg KOH/g.

### Beispiel 2: Monohydroxyfunktionelles polyethermodifiziertes Polydimethylsiloxan

In einem mit Rührer, Thermometer, Tropftrichter, Rückflusskühler und Stickstoffeinleitungsrohr versehenen Vierhalskolben werden Monoallylpolyethylenglykol-co-propylenglycol (149 g, Mn ≈ 830 g/mol) und Karstedt Katalysator (2 g, 0,2%ige Anlösung in Xylol) vorgelegt und auf 60 °C erhitzt. Die Zudosierung eines mono-SiH-funktionellen Polydimethylsiloxans (300 g, Mn = 2000 g/mol) erfolgt in der Art, daß die Temperatur 70 °C nicht überschreitet. Die Umsetzung des mono-SiH-funktionellen Polysiloxans wird mittels gasvolumetrischer Bestimmung verfolgt. Die gemessene Hydroxyzahl des Produktes beträgt 24 mg KOH/g.

### Beispiel 3: Monohydroxyfunktionelles Polydimethylsiloxan

In einem mit Rührer, Thermometer, Tropftrichter, Rückflusskühler und Stickstoffeinleitungsrohr versehenen Vierhalskolben werden mono-SiH-funktionelles Polysiloxan (300 g, Mn ≈ 2000 g/mol) und Karstedt Katalysator (0,75 g, 0,2%ige Anlösung in Xylol) vorgelegt und auf 60 °C erhitzt. Die Zudosierung von Monoallylglycol (19,9 g) erfolgt in der Art, daß die Temperatur 70 °C nicht überschreitet. Die Umsetzung des mono-SiH-funktionellen Polysiloxans wird mittels gasvolumetrischer Bestimmung verfolgt. Nach vollständiger Umsetzung wird das überschüssige Allylglycol abdestilliert. Die gemessene Hydroxyzahl des Produktes beträgt 25,2 mg KOH/g.

### Beispiel 4: Dihydroxyfunktionelles Polydimethylsiloxan

In einem mit Rührer, Thermometer, Tropftrichter, Rückflusskühler und Stickstoffeinleitungsrohr versehenen Vierhalskolben werden di-SiH-funktionelles Polysiloxan (522 g, Mn ≈ 2000 g/mol) und Karstedt Katalysator (1,31 g, 0,2%ige Anlösung in Xylol) vorgelegt und auf 60 °C erhitzt. Die Zudosierung von Monoallylglycol (73,0 g) erfolgt in der Art, daß die Temperatur 70 °C nicht überschreitet. Die Umsetzung des di-SiH-funktionellen Polysiloxans wird mittels gasvolumetrischer Bestimmung verfolgt. Nach vollständiger Umsetzung wird das überschüssige Allylglycol abdestilliert. Die gemessene Hydroxyzahl des Produktes beträgt 53,3 mg KOH/g.

### Beispiel 5: Dihydroxyfunktionelles Polydimethylsiloxan

In einem mit Rührer, Thermometer, Tropftrichter, Rückflusskühler und Stickstoffeinleitungsrohr versehenen Vierhalskolben werden di-SiH-funktionelles Polysiloxan (300 g, Mn ≈ 4000 g/mol) und Karstedt Katalysator (0,75 g, 0,2%ige Anlösung in Xylol) vorgelegt und auf 60 °C erhitzt. Die Zudosierung von Monoallylglycol (17,4 g) erfolgt in der Art, daß die Temperatur 70 °C nicht überschreitet. Die Umsetzung des di-SiH-funktionellen Polysiloxans wird mittels gasvolumetrischer Bestimmung verfolgt. Nach vollständiger Umsetzung wird das überschüssige Allylglycol abdestilliert. Die gemessene Hydroxyzahl des Produktes beträgt 25,4 mg KOH/g.

### Allgemeine Synthesevorschrift der zur erfindungsgemäßen Verwendung einzusetzenden Polyisocyanataddukte und des Vergleichsbeispiels

In einem mit Tropftricher, Rührer, Thermometer und Kühler versehenen Vierhalskolben werden Ethylacetat (ca. 65% bezogen auf den Gesamtansatz), Desmodur N3300 und ein entsprechendes Acrylat (vgl. Tabelle 1) vorgelegt und auf 60°C erhitzt. Anschließend wird 0,02% DBTL (Di-n-butylzinndilaurat) zugegeben. Nach 5 Stunden wird das Silikon zugegeben. Das Lösungsmittel wird abdestilliert und die Additive 40%ig in TPGDA (Tripropylenglycoldiacrylat) angelöst. Entsprechend der allgemeinen Vorschrift wurde eine Serie von Polyisocyanataddukten hergestellt:

**Tabelle 1: Herstellung der Polyisocyanataddukte**

| **Beispiel** | **Polysiloxan** | **Desmodur N3300** | **Acrylat** | **M_{w}** |
|---|---|---|---|---|
| Beispiel 6 | Beispiel 1 | 60 g | Tone M100 | 6900 |
| | 103,6 g | | 86,9 g | |
| Beispiel 7 | Beispiel 2 | 50 g | Tone M100 | 8000 |
| | 101,1 g | | 72,4 g | |
| Beispiel 8 | Beispiel 2 | 60 g | Blemmer AE200 | 7300 |
| | 120, 8 g | | 85,1 | |
| Beispiel 9 | Beispiel 3 | 40 g | Placcel FA5 | 7800 |
| | 81 g | | 118,8 g | |
| Beispiel 10 | Beispiel 3 | 50 g | Blemmer AE400 | 17500 |
| | 101,5 g | | 94,8 g | |
| Beispiel 11 | Beispiel 2 | 60 g | Tone M100 / Sartomer SR444D | 7400 |
| | 112,0 g | | 72,0 g / 22,1 g | |
| Vergleichsbeispiel 1 | Beispiel 4 | 50 g | Tone M100 | 12900 |
| | 43,1 g | | 72,4 g | |
| Vergleichsbeispiel 2 | Beispiel 5 | 40 g | Placcel FA5 | 11100 |
| | 81,8 g | | 117,2 g | |
| Vergleichsbeispiel 3 | Beispiel 4 | 40 g | Placcel FA5 | 18700 |
| | 69,0 g | | 95,1 g | |
| Vergleichsbeispiel 4 | Beispiel 4 | 50 g | Blemmer AE400 | - |
| | 81,9 g | | 77,7 g | |
| Vergleichsbeispiel 5 | Beispiel 5 | 50 g | Blemmer AE400 | - |
| | 101,3 g | | 93,6 g | |

| | | | | |
|---|---|---|---|---|
| Tone M100: CH₂=CH-C(O)-O-C₂H₄O-[C(O)-C₅H₁₀O]₂-H Blemmer AE200: CH₂=CH-C(O)-O-[C₂H₄O]_{4.5}-H Placcel FA5: CH₂=CH-C(O)-O-C₂H₄O-[C(O)-C₅H₁₀O]₅-H Blemmer AE400: CH₂=CH-C(O)-O-[C₂H₄O]₁₀-H Sartomer SR444D: HOCH₂-C-[CH₂-OC(O)-CH=CH₂]₃ | | | | |

Die Vergleichsbeispiele 4 und 5 sind während der Synthese vernetzt. Die Bestimmung des gewichtsmittleren Molekulargewichts (M_{w}) war daher nicht möglich. Des Weiteren konnten die resultierenden Reaktionsprodukte nicht als Additiv verwendet werden.

### Anwendungsbeispiele

Unter Verwendung der Polyisocyanataddukte der Beispiele 6 bis 11 sowie der Vergleichsbeispiele 1 bis 3 wurden Beschichtungszusammensetzungen (vergleiche Tabelle 2) hergestellt. Mit Hilfe dieser Beschichtungszusammensetzungen wurden Beschichtungen auf Glasplatten hergestellt. Es wurden unterschiedliche Eigenschaften der Beschichtungen untersucht. Die untersuchten Eigenschaften sowie die dazu gehörigen Analyseverfahren sind in der Folge beschrieben:

**Tabelle 2: Strahlenhärtendes, Reaktivverdünner-basierendes Beschichtungssystem**

| **Bestandteil** | **Menge** (in Gew.%, bezogen auf Gesamtformulierung) |
|---|---|
| Laromer PE 56 F | 50,2 |
| Laromer DPGDA | 45,8 |
| Irgacure 500 | 4 |

| | |
|---|---|
| Laromer PE 56 F: Ungesättigtes Polyesteracrylatharz Laromer DPGDA (Dipropylenglykoldiacrylat, Acrylsäureester als Reaktiwerdünner (BASF)) Irgacure 500: Mischung von zwei Photoinitiatoren (BASF) | |

Die Additive, 0,1%, bzw. 0.3% Polyisocyanataddukt bezogen auf die Gesamtformulierung, werden nachträglich mittels Dissolver (drei Minuten bei 2000 rpm) eingearbeitet. Einen Tag nach der Einarbeitung werden die additivierten Lacke mit einem 25-µm-Kastenrakel auf eine Glasplatte aufgezogen. Nach dem Aufziehen werden die Proben bei 5m/min mit einer Hg-Lampe (120 W/cm) in einer UV-Anlage gehärtet.

Die Bildung von Kratern, der Verlauf und das Entstehen einer Trübung im Lack wird visuell beurteilt. (1 = gut, 5 = schlecht).

Zur Bestimmung des COF-Wertes (Reduzierung des Gleitwiderstandes) werden die applizierten Bleche mit dem Gerät Altek-9505 AE der ALTEK Company vermessen. Dabei wird ein 1 kg Gewicht mit der Geschwindigkeit 127 mm/min über das Blech gezogen. Der erhaltene Wert wird zur Berechnung des COF-Wertes mit dem Faktor 0,01 multipliziert.

### Edding-Test:

Es wird mit einem Permanent-Marker des Typs "Edding 400" die Lackoberfläche beschriftet und visuell beurteilt, ob die Oberfläche beschreibbar ist. Es wird beurteilt, ob die Tinte auf der Oberfläche spreitet oder sich zusammenzieht. Nach dem Trocknen der Tinte wird versucht diese mit einem trockenen Tuch abzuwischen.

### Bewertung: 1 - 5

1 = Tinte zieht sich zusammen, lässt sich restlos mit einem Papiertuch entfernen
5 = Tinte spreitet sehr gut auf Untergrund, lässt sich praktisch nicht entfernen

### Mineralöl-Ablauftest:

Es wird ein Tropfen handelsübliches Mineralöl auf die Lackoberfläche gegeben. Anschließend wird die beschichtete Lackoberfläche gekippt, bis der Tropfen etwa 10 cm gelaufen ist. Nach Ablauf von 5 Minuten wird die Ölspur beziehungsweise eine erneute Tropfenbildung visuell bewertet.

### Bewertung: 1 - 5:

1 = Die Ölspur bildet sich sofort in einzelne Tropfen zurück
5 = Die Ölspur bildet sich nicht zurück, sondern spreitet eventuell weiter

**Tabelle 3: Ergebnisse bei einer Dosierung von 0,3% Additiv:**

| **Beschreibung** | **Krater** | **Verlauf** | **Trübung** | **COF** | **Eddingtest** | **Ölablauftest** |
|---|---|---|---|---|---|---|
| Null-Probe | 1-2 | 1 | 1 | 0,68 | 5 | 5 |
| Beispiel 6 | 1 | 1 | 1 | 0,09 | 2 | 2 |
| Beispiel 7 | 1-2 | 1 | 1 | 0,09 | 2 | 1 |
| Beispiel 8 | 1 | 1-2 | 1 | 0,10 | 2 | 2 |
| Beispiel 9 | 1 | 1 | 1 | 0,08 | 2 | 2 |
| Beispiel 10 | 1-2 | 1 | 1 | 0,08 | 2 | 2 |
| Beispiel 11 | 1 | 1 | 1 | 0,10 | 2 | 2 |
| | | | | | | |
| | | | | | | |
| | | | | | | |
| Vergleichsbeispiel 1 | 1-2 | 1-2 | 1 | 0,14 | 2 | 2 |
| Vergleichsbeispiel 2 | 1-2 | 1 | 1 | 0,12 | 2 | 2 |
| Vergleichsbeispiel 3 | 1 | 1-2 | 1 | 0,12 | 2 | 3 |
| Tegorad 2010 | 3 | 3-4 | 1 | 0,15 | 2 | 1 |

Tegorad 2010 ist ein handelsübliches Siloxanacrylat der Tego Chemie Service GmbH, welches keine Urethangruppen enthält.

Bei der Null-Probe handelt es sich um ein strahlenhärtbares Beschichtungssystem gemäß Tabelle 2, wobei kein Additiv eingesetzt wurde.

Die Ergebnisse aus Tabelle 3 zeigen, dass durch die erfindungsgemäße Verwendung der Polyisocyanataddukte der Beispiele 6 bis 11 als Additive eine Verbesserung der Gleiteigenschaften erzielt wird. Gleichzeitig bleiben die hervorragenden Eigenschaften wie geringe Kraterbildung, hervorragender Verlauf, geringere Trübung und die Beständigkeit gegenüber Verschmutzungen erhalten oder werden sogar verbessert.

**Tabelle 4: Ergebnisse bei einer Dosierung von 0,1% Additiv:**

| **Beschreibung** | **Krater** | **Verlauf** | **Trübung** | **COF** |
|---|---|---|---|---|
| Null-Probe | 1-2 | 1 | 1 | 0,68 |
| Beispiel 6 | 1 | 1 | 1 | 0,17 |
| Beispiel 7 | 2-3 | 2 | 1 | 0,25 |
| Beispiel 8 | 2 | 1 | 1 | 0,22 |
| Beispiel 9 | 1-2 | 1-2 | 1 | 0,18 |
| Beispiel 10 | 1-2 | 1-2 | 1 | 0,20 |
| Beispiel 11 | 1 | 1 | 1 | 0,18 |
| | | | | |
| Vergleichsbeispiel 1 | 2-3 | 2 | 1 | 0,38 |
| Vergleichsbeispiel 2 | 1 | 1-2 | 1 | 0,30 |
| Vergleichsbeispiel 3 | 1-2 | 1 | 1 | 0,31 |

Die Ergebnisse aus Tabelle 4 zeigen, dass durch die erfindungsgemäße Verwendung der Polyisocyanataddukte der Beispiele 6 bis 11 als Additive bereits bei einer niedrigen Additivdosierung eine besonders starke Verbesserung der Gleiteigenschaften erzielt wird.

## Patentansprüche

1. Verwendung von 0,01 bis 5 Gew.-% der Polyisocyanataddukte, erhältlich durch Umsetzung von
i. mindestens einem Polysiloxan, welches die folgende Struktur (I) besitzt 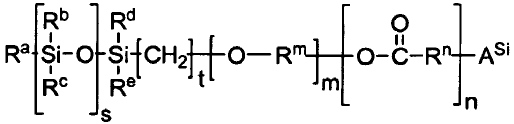
wobei t = 2 bis 30, m = 0 bis 100, n = 0 bis 100, s = 1 bis 400,
R^{a} für einen halogenierten Alkylrest mit 1 bis 30 Kohlenstoffatomen, einen linearen Alkylrest mit 1 bis 30 Kohlenstoffatomen, einen verzweigten oder zyklischen Alkylrest mit 3 bis 30 Kohlenstoffatomen oder einen Arylrest mit 6 bis 30 Kohlenstoffatomen oder einen Alkylarylrest oder einen Arylalkylrest mit 7 bis 30 Kohlenstoffatomen steht,
alle R^{b}, R^{c}, R^{d} und R^{e} unabhängig voneinander für lineare Alkylreste mit 1 bis 6 Kohlenstoffatomen, verzweigte oder zyklische Alkylreste mit 3 bis 6 Kohlenstoffatomen oder Arylreste mit 6 bis 12 Kohlenstoffatomen oder Alkylarylreste oder Arylalkylreste mit 7 bis 12 Kohlenstoffatomen stehen,
R^{d} und R^{e} zudem unabhängig voneinander für R^{a}[SiR^{b}R^{c}O]ₛ stehen können, wobei R^{a}, R^{b}, R^{c} und s wie oben definiert sind und unabhängig davon ausgewählt sind,
die m (O-R^{m})-Einheiten und die n (O-CO-Rⁿ)-Einheiten in der Struktureinheit [O-R^{m}]ₘ-[O-CO-Rⁿ]ₙ in beliebiger Reihenfolge angeordnet sind,
R^{m} für einen linearen Alkylenrest mit 2 bis 4 Kohlenstoffatomen oder einen verzweigten Alkylenrest mit 3 oder 4 Kohlenstoffatomen steht,
Rⁿ für einen linearen Alkylenrest mit 2 bis 6 Kohlenstoffatomen oder einen verzweigten Alkylenrest mit 3 bis 6 Kohlenstoffatomen oder einen zyklischen Alkylenrest mit 3 bis 6 Kohlenstoffatomen steht,
die Reste R^{m} und Rⁿ für jede der m (O-R^{m})-Einheiten und jede der n (O-CO-Rⁿ)-Einheiten unabhängig gewählt werden,
und es sich bei A^{Si} um eine OH-, NH₂- oder CO₂H-Gruppe handelt;
ii. mindestens einem Polyisocyanat mit mindestens drei NCO-Gruppen,
iii. mindestens einem (Meth)acrylat, welches die folgende Struktur (II) besitzt: 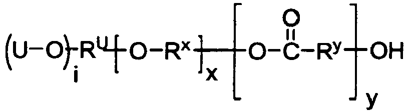
wobei x = 0 bis 100, y = 0 bis 100,
U für eine der folgenden Gruppen steht: 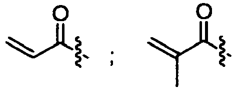
R^{U} für einen (i+1)-bindigen organischen Rest mit i = 1 bis 5 steht,
die x (O-R^{x})-Einheiten und die y (O-CO-R^{y})-Einheiten in der Struktureinheit [O-R^{x}]ₓ-[O-CO-R^{y}]_{y} in beliebiger Reihenfolge angeordnet sind,
R^{x} für einen linearen Alkylenrest mit 2 bis 4 Kohlenstoffatomen oder einen verzweigten Alkylenrest mit 3 oder 4 Kohlenstoffatomen steht,
R^{y} für einen linearen Alkylenrest mit 2 bis 6 Kohlenstoffatomen oder einen verzweigten Alkylenrest mit 3 bis 6 Kohlenstoffatomen oder einen zyklischen Alkylenrest mit 3 bis 6 Kohlenstoffatomen steht,
die Reste R^{x} und R^{y} für jede der x (O-R^{x})-Einheiten und jede der y (O-CO-R^{y})-Einheiten unabhängig gewählt werden, und
iv. optional einer oder mehrerer mit Isocyanaten reaktiven Verbindungen der Struktur (III), welche von den unter i bis iii eingesetzten Komponenten verschieden ist:
R^{z}-(A^{z})_{z} ; mit z = 1 oder 2
wobei R^{z} für einen aliphatischen oder aromatischen Rest steht und es sich bei A^{z} um eine OH-, NH₂- oder CO₂H-Gruppe handelt,
und m + n + x + y ≥ 3 ist,
als Additiv in strahlenhärtbaren Beschichtungsmittelzusammensetzungen, wobei sich die gewichtsprozentuale Angabe auf die Gesamtformulierung der strahlenhärtbaren Beschichtungsmittelzusammensetzung bezieht.

2. Verwendung gemäß Anspruch 1, **dadurch gekennzeichnet, dass** die Polyisocyanataddukte als Additiv zur Verringerung der Kraterbildung, zur Verbesserung der Gleiteigenschaften, zur Vermeidung von Trübungen und zur Erzielung von schmutzabweisenden, leicht zu reinigenden, anti-adhäsiven Oberflächen sowie als Verlaufmittel eingesetzt werden.

3. Strahlenhärtbare Beschichtungsmittelzusammensetzung enthaltend
(a) mindestens ein strahlenhärtbares Polymer als Bindemittel und
(b) mindestens ein Polyisocyanataddukt, erhältlich durch Umsetzung von
i. mindestens einem Polysiloxan, welches die folgende Struktur (I) besitzt 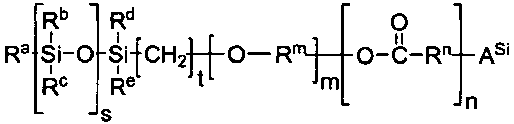
wobei t = 2 bis 30, m = 0 bis 100, n = 0 bis 100, s = 1 bis 400,
R^{a} für einen halogenierten Alkylrest mit 1 bis 30 Kohlenstoffatomen, einen linearen Alkylrest mit 1 bis 30 Kohlenstoffatomen, einen verzweigten oder zyklischen Alkylrest mit 3 bis 30 Kohlenstoffatomen oder einen Arylrest mit 6 bis 30 Kohlenstoffatomen oder einen Alkylarylrest oder einen Arylalkylrest mit 7 bis 30 Kohlenstoffatomen steht,
alle R^{b}, R^{c}, R^{d} und R^{e} unabhängig voneinander für lineare Alkylreste mit 1 bis 6 Kohlenstoffatomen, verzweigte oder zyklische Alkylreste mit 3 bis 6 Kohlenstoffatomen oder Arylreste mit 6 bis 12 Kohlenstoffatomen oder Alkylarylreste oder Arylalkylreste mit 7 bis 12 Kohlenstoffatomen stehen,
R^{d} und R^{e} zudem unabhängig voneinander für R^{a}[SiR^{b}R^{c}O]ₛ stehen können, wobei R^{a}, R^{b}, R^{c} und s wie oben definiert sind und unabhängig davon ausgewählt sind,
die m (O-R^{m})-Einheiten und die n (O-CO-Rⁿ)-Einheiten in der Struktureinheit [O-R^{m}]ₘ-[O-CO-Rⁿ]ₙ in beliebiger Reihenfolge angeordnet sind,
R^{m} für einen linearen Alkylenrest mit 2 bis 4 Kohlenstoffatomen oder einen verzweigten Alkylenrest mit 3 oder 4 Kohlenstoffatomen steht,
Rⁿ für einen linearen Alkylenrest mit 2 bis 6 Kohlenstoffatomen oder einen verzweigten Alkylenrest mit 3 bis 6 Kohlenstoffatomen oder einen zyklischen Alkylenrest mit 3 bis 6 Kohlenstoffatomen steht,
die Reste R^{m} und Rⁿ für jede der m (O-R^{m})-Einheiten und jede der n (O-CO-Rⁿ)-Einheiten unabhängig gewählt werden,
und es sich bei A^{Si} um eine OH-, NH₂- oder CO₂H-Gruppe handelt;
ii. mindestens einem Polyisocyanat mit mindestens drei NCO-Gruppen,
iii. mindestens einem (Meth)acrylat, welches die folgende Struktur (II) besitzt: 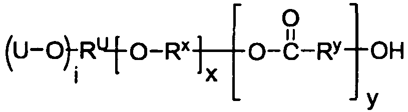
wobei x = 0 bis 100, y = 0 bis 100,
U für eine der folgenden Gruppen steht: 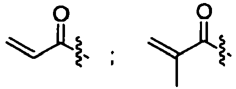
R^{U} für einen (i+1)-bindigen organischen Rest mit i = 1 bis 5 steht,
die x (O-R^{X})-Einheiten und die y (O-CO-R^{y})-Einheiten in der Struktureinheit [O-R^{x}]ₓ-[O-CO-R^{y}]_{y} in beliebiger Reihenfolge angeordnet sind,
R^{x} für einen linearen Alkylenrest mit 2 bis 4 Kohlenstoffatomen oder einen verzweigten Alkylenrest mit 3 oder 4 Kohlenstoffatomen steht,
R^{y} für einen linearen Alkylenrest mit 2 bis 6 Kohlenstoffatomen oder einen verzweigten Alkylenrest mit 3 bis 6 Kohlenstoffatomen oder einen zyklischen Alkylenrest mit 3 bis 6 Kohlenstoffatomen steht,
die Reste R^{x} und R^{y} für jede der x (O-R^{x})-Einheiten und jede der y (O-CO-R^{y})-Einheiten unabhängig gewählt werden, und
iv. optional einer oder mehrerer mit Isocyanaten reaktiven Verbindungen der Struktur (III), welche von den unter i bis iii eingesetzten Komponenten verschieden ist:
R^{z}-(A^{z})_{z}; mit z = 1 oder 2
wobei R^{z} für einen aliphatischen oder aromatischen Rest steht und es sich bei A^{z} um eine OH-, NH₂- oder CO₂H-Gruppe handelt,
und m + n + x + y ≥ 3 ist,
in einer Menge von 0,01 bis 5 Gew.-%, wobei sich die gewichtsprozentuale Angabe auf die Gesamtformulierung der strahlenhärtbaren Beschichtungsmittelzusammensetzung bezieht.

4. Strahlenhärtbare Beschichtungsmittelzusammensetzung gemäß Anspruch 3 **dadurch gekennzeichnet, dass** das strahlenhärtbare Polymer (a) zu 30 bis 99 Gew.-%, mindestens ein Polyisocyanataddukt (b) zu 0,01 bis 5 Gew.-% und als weitere Komponenten
(c) 0 bis 65 Gew.-% mindestens eines Reaktiwerdünners und
(d) 0,5 bis 5 Gew.-% mindestens eines Photoinitiators,
enthalten sind, wobei sich die gewichtsprozentualen Angaben jeweils auf die Gesamtformulierung der strahlenhärtbaren Beschichtungsmittelzusammensetzung beziehen.

5. Strahlenhärtbare Beschichtungsmittelzusammensetzung nach mindestens einem der Ansprüche 3 und 4 **dadurch gekennzeichnet, dass** als strahlenhärtbares Polymer (a) Urethan(meth)acrylate und Polyester(meth)acrylatharze eingesetzt werden.

## Claims

1. Use of 0.01 to 5 % by weight of the polyisocyanate adducts that are obtainable by reaction of
i. at least one polysiloxane having the following structure (I) 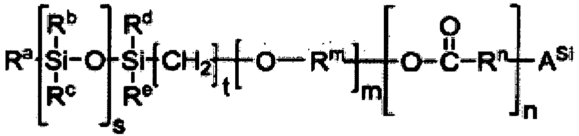
wherein t = 2 to 30, m = 0 to 100, n = 0 to 100, s = 1 to 400,
R^{a} represents a halogenated alkyl radical having 1 to 30 carbon atoms, a linear alkyl radical having 1 to 30 carbon atoms, a branched or cyclic alkyl radical having 3 to 30 carbon atoms or an aryl radical having 6 to 30 carbon atoms or an alkylaryl radical or arylalkyl radical having 7 to 30 carbon atoms,
all R^{b}, R^{c}, R^{d} and R^{e} independently of one another represent linear alkyl radicals having 1 to 6 carbon atoms, branched or cyclic alkyl radicals having 3 to 6 carbon atoms or aryl radicals having 6 to 12 carbon atoms or alkylaryl radicals or arylalkyl radicals having 7 to 12 carbon atoms,
R^{d} and R^{e} also independently of one another can represent R^{a}[SiR^{b}R^{c}O]ₛ, wherein R^{a}, R^{b}, R^{c} and s are as defined above and are chosen independently thereof,
the m (O-R^{m}) units and the n (O-CO-Rⁿ) units in the structural unit [O-R^{m}]m-[O-CO-Rⁿ]ₙ are arranged in any order,
R^{m} represents a linear alkylene radical having 2 to 4 carbon atoms or a branched alkylene radical having 3 or 4 carbon atoms,
Rⁿ represents a linear alkylene radical having 2 to 6 carbon atoms or a branched alkylene radical having 3 to 6 carbon atoms or a cyclic alkylene radical having 3 to 6 carbon atoms,
the radicals R^{m} and Rⁿ for each of the m (O-R^{m}) units and each of the n (O-CO-Rⁿ) units are chosen independently from one another,
and A^{Si} is a OH, NH₂ or CO₂H group;
ii. at least one polyisocyanate having at least three NCO groups,
iii. at least one (meth)acrylate having the following structure (II): 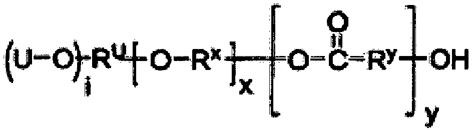
wherein x = 0 to 100, y = 0 to 100,
U represents one of the following groups: 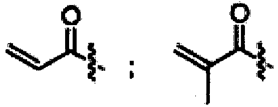
R^{U} represents an (i+1)-valent organic radical with i = 1 to 5,
the x (O-R^{x}) units and the y (O-CO-R^{y}) units in the structural unit [O-R^{x}]ₓ-[O-CO-R^{y}]_{y} are arranged in any order,
R^{x} represents a linear alkylene radical having 2 to 4 carbon atoms or a branched alkylene radical having 3 or 4 carbon atoms,
R^{y} represents a linear alkylene radical having 2 to 6 carbon atoms or a branched alkylene radical having 3 to 6 carbon atoms or a cyclic alkylene radical having 3 to 6 carbon atoms,
the radicals R^{x} and R^{y} for each of the x (O-R^{x}) units and each of the y (O-CO-R^{y}) units are chosen independently from one another, and
iv. optionally one or more compounds reactive with isocyanates and having the structure (III), which is different from the components used in i to iii:
R^{z}-(A^{z})_{z} ; with z = 1 or 2,
wherein R^{z} represents an aliphatic or aromatic radical and A^{z} is a OH, NH₂ or CO₂H group,
and m + n + x + y ≥ 3,
as an additive in radiation-curable coating compositions, wherein the given weight percentages respectively refer to the total formulation of the radiation-curable coating composition.

2. Use according to claim 1, **characterised in that** the polyisocyanate adducts are used as an additive for the reduction of cratering, for the improvement of antifriction properties, for the prevention of turbidity, and for obtaining dirt-repellent and anti-adhesive surfaces that are easy to clean, and as a levelling agent as well.

3. Radiation-curable coating composition, comprising
(a) at least one radiation-curable polymer as a binding agent and
(b) at least one polyisocyanate adduct that is obtainable by reaction of
i. at least one polysiloxane having the following structure (I) 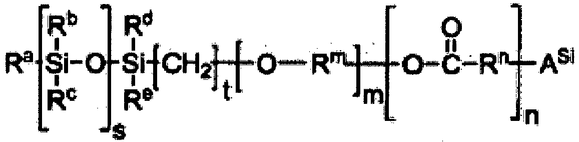
wherein t = 2 to 30, m = 0 to 100, n = 0 to 100, s = 1 to 400,
R^{a} represents a halogenated alkyl radical having 1 to 30 carbon atoms, a linear alkyl radical having 1 to 30 carbon atoms, a branched or cyclic alkyl radical having 3 to 30 carbon atoms or an aryl radical having 6 to 30 carbon atoms or an alkylaryl radical or arylalkyl radical having 7 to 30 carbon atoms,
all R^{b}, R^{c}, R^{d} and R^{e} independently of one another represent linear alkyl radicals having 1 to 6 carbon atoms, branched or cyclic alkyl radicals having 3 to 6 carbon atoms or aryl radicals having 6 to 12 carbon atoms or alkylaryl radicals or arylalkyl radicals having 7 to 12 carbon atoms,
R^{d} and R^{e} also independently of one another can represent R^{a}[SiR^{b}R^{c}O]ₛ, wherein R^{a}, R^{b}, R^{c} and s are as defined above and are chosen independently thereof,
the m (O-R^{m}) units and the n (O-CO-Rⁿ) units in the structural unit [O-R^{m}]ₘ-[O-CO-Rⁿ]ₙ are arranged in any order,
R^{m} represents a linear alkylene radical having 2 to 4 carbon atoms or a branched alkylene radical having 3 or 4 carbon atoms,
Rⁿ represents a linear alkylene radical having 2 to 6 carbon atoms or a branched alkylene radical having 3 to 6 carbon atoms or a cyclic alkylene radical having 3 to 6 carbon atoms,
the radicals R^{m} and Rⁿ for each of the m (O-R^{m}) units and each of the n (O-CO-Rⁿ) units are chosen independently from one another,
and A^{Si} is a OH, NH₂ or CO₂H group;
ii. at least one polyisocyanate having at least three NCO groups,
iii. at least one (meth)acrylate having the following structure (II): 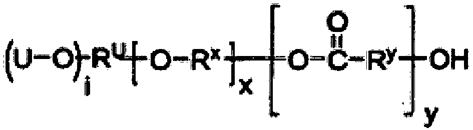
wherein x = 0 to 100, y = 0 to 100,
U represents one of the following groups: 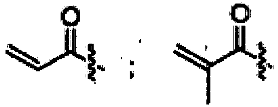
R^{U} represents an (i+1)-valent organic radical with i = 1 to 5,
the x (O-R^{X}) units and the y (O-CO-R^{y}) units in the structural unit [O-R^{x}]ₓ-[O-CO-R^{y}]_{y} are arranged in any order,
R^{x} represents a linear alkylene radical having 2 to 4 carbon atoms or a branched alkylene radical having 3 or 4 carbon atoms,
R^{y} represents a linear alkylene radical having 2 to 6 carbon atoms or a branched alkylene radical having 3 to 6 carbon atoms or a cyclic alkylene radical having 3 to 6 carbon atoms,
the radicals R^{x} and R^{y} for each of the x (O-R^{x}) units and each of the y (O-CO-R^{y}) units are chosen independently from one another, and
iv. optionally one or more compounds reactive with isocyanates and having the structure (III), which is different from the components used in i to iii:
R_{z}-(A^{z})_{z} ; with z = 1 or 2,
wherein R^{z} represents an aliphatic or aromatic radical and A^{z} is a OH, NH₂ or CO₂H group,
and m + n + x + y ≥ 3,
in a quantity of 0.01 to 5 % by weight, wherein the given percentages by weight respectively refer to the total formulation of the radiation-curable coating composition.

4. Radiation-curable coating composition according to claim 3, **characterised in that** it contains 30 to 99 % by weight of the radiation curable polymer (a), 0.01 to 5 % by weight of at least one polyisocyanate adduct (b), and as further components
(c) 0 to 65 % by weight of at least one reactive diluent and
(d) 0.5 to 5 % by weight of at least one photoinitiator,
wherein the given weight percentages respectively refer to the total formulation of the radiation-curable coating composition.

5. Radiation-curable coating composition according to at least one of claims 3 and 4, **characterised in that** urethane (meth)acrylates and polyester (meth)acrylate resins are used as the radiation-curable polymer (a).

## Revendications

1. Utilisation de 0,01 à 5 % en poids des adduits de polyisocyanate qui peuvent être obtenus par réaction de
i. au moins un polysiloxane avec la structure (I) suivante: 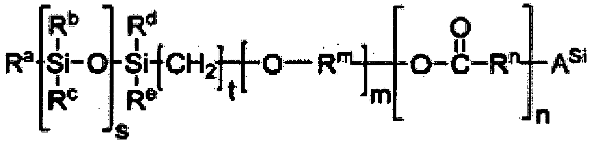
où t = 2 à 30, m = 0 à 100, n = O à 100, s = 1 à 400,
R^{a} représente un groupement alkyle halogéné avec 1 à 30 atomes de carbone, un groupement alkyle linéaire avec 1 à 30 atomes de carbone, un groupement alkyle ramifié ou cyclique avec 3 à 30 atomes de carbone ou un groupement aryle avec 6 à 30 atomes de carbone, ou un groupement alkylaryle ou un groupement arylalkyle avec 7 à 30 atomes de carbone,
tous R^{b}, R^{c}, R^{d} et R^{e} représentent, indépendamment l'un de l'autre, des groupements alkyle linéaires avec 1 à 6 atomes de carbone, des groupements alkyle ramifiés ou cycliques avec 3 à 6 atomes de carbone, ou des groupements aryle avec 6 à 12 atomes de carbone ou des groupements alkylaryle ou groupements arylalkyle avec 7 à 12 atomes de carbone,
R^{d} et R^{e} peuvent aussi, indépendamment l'un de l'autre, représenter R^{a}[SiR^{b}R^{c}O]ₛ, où R^{a}, R^{b}, R^{c} et s sont comme définis ci-dessus et sont choisis indépendamment,
les m unités (0-R^{m}) et les n unités (O-CO-Rⁿ) dans l'unité structurelle [O-R^{m}]ₘ-[O-CO-Rⁿ]ₙ sont disposées dans un ordre quelconque,
R^{m} représente un groupement alkylène linéaire avec 2 à 4 atomes de carbone ou un groupement alkylène ramifié avec 3 ou 4 atomes de carbone,
Rⁿ représente un groupement alkylène linéaire avec 2 à 6 atomes de carbone ou un groupement alkylène ramifié avec 3 à 6 atomes de carbone ou un groupement alkylène cyclique avec 3 à 6 atomes de carbone,
les groupements R^{m} et Rⁿ sont choisis indépendamment pour chacune des m unités (O-R^{m}) et chacune des n unités (O-CO-Rⁿ),
et A^{Si} est un groupe OH, NH₂ ou CO₂H;
ii. au moins un polyisocyanate avec au moins trois groupements NCO,
iii. au moins un (méth)acrylate avec la structure (II) suivante : 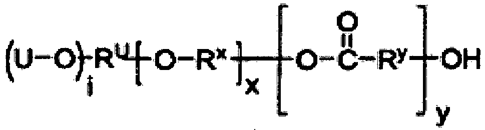
où x = 0 à 100, y = 0 à 100,
U représente un des groupes suivants : 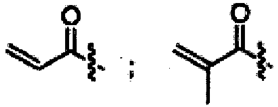
R^{U} représente un groupement organique avec (i+1) liaisons, où i = 1 à 5,
les x unités de (O-R^{x}) et les y unités de (O-CO-R^{y}) dans l'unité structurelle [O-R^{x}]ₓ-[O-CO-R^{y}]_{y} sont disposées dans un ordre quelconque,
R^{x} représente un groupement alkylène linéaire avec 2 à 4 atomes de carbone ou un groupement alkylène ramifié avec 3 ou 4 atomes de carbone,
R^{y} représente un groupement alkylène linéaire avec 2 à 6 atomes de carbone ou un groupement alkylène ramifié avec 3 à 6 atomes de carbone ou un groupement alkylène cyclique avec 3 à 6 atomes de carbone,
les groupements R^{x} et R^{y} sont choisis indépendamment pour chacune des x unités (O-R^{x}) et chacune des y unités (O-CO-R^{y}), et
iv. optionnellement un ou plusieurs composés réactifs avec des isocyanates et ayant la structure (III) suivante qui est différente de celle des composés utilisés dans i à iii :
R^{z}-(A^{z})_{z} ; avec z = 1 ou 2,
où R^{z} représente un groupement aliphatique ou aromatique et A^{z} est un groupe OH, NH₂ ou CO₂H,
et m + n + x + y ≥ 3,
en tant qu'additif dans des compositions de revêtement durcissables par irradiation, les indications de pourcentages en poids se rapportant à la formulation totale de la composition de revêtement durcissable par irradiation.

2. Utilisation selon la revendication 1, **caractérisée en ce que** les adduits de polyisocyanates sont utilisés comme additifs pour la réduction de la formation de cratères, pour l'amélioration des caractéristiques de glissement, pour la prévention des opacifications, pour obtenir des surfaces non salissantes, antiadhésives et faciles à nettoyer et en tant qu'agent de nivellement.

3. Composition de revêtement durcissable par irradiation, contenant
(a) au moins un polymère durcissable par irradiation en tant que liant, et
(b) au moins un adduit de polyisocyanate qui peut être obtenu par réaction de
i. au moins un polysiloxane avec la structure (I) suivante: 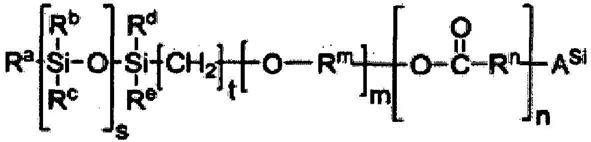
où t = 2 à 30, m = 0 à 100, n = 0 à 100, s = 1 à 400,
R^{a} représente un groupement alkyle halogéné avec 1 à 30 atomes de carbone, un groupement alkyle linéaire avec 1 à 30 atomes de carbone, un groupement alkyle ramifié ou cyclique avec 3 à 30 atomes de carbone ou un groupement aryle avec 6 à 30 atomes de carbone, ou un groupement alkylaryle ou un groupement arylalkyle avec 7 à 30 atomes de carbone,
tous R^{b}, R^{c}, R^{d} et R^{e} représentent, indépendamment l'un de l'autre, des groupements alkyle linéaires avec 1 à 6 atomes de carbone, des groupements alkyle ramifiés ou cycliques avec 3 à 6 atomes de carbone, ou des groupements aryle avec 6 à 12 atomes de carbone ou des groupements alkylaryle ou groupements arylalkyle avec 7 à 12 atomes de carbone,
R^{d} et R^{e} peuvent aussi, indépendamment l'un de l'autre, représenter R^{a}[SiR^{b}R^{c}O]ₛ, où R^{a}, R^{b}, R^{c} et s sont comme définis ci-dessus et sont choisis indépendamment, les m unités (O-R^{m}) et les n unités (O-CO-Rⁿ) dans l'unité structurelle [O-R^{m}]ₘ-[O-CO-Rⁿ]ₙ sont disposées dans un ordre quelconque,
R^{m} représente un groupement alkylène linéaire avec 2 à 4 atomes de carbone ou un groupement alkylène ramifié avec 3 ou 4 atomes de carbone,
Rⁿ représente un groupement alkylène linéaire avec 2 à 6 atomes de carbone ou un groupement alkylène ramifié avec 3 à 6 atomes de carbone ou un groupement alkylène cyclique avec 3 à 6 atomes de carbone,
les groupements R^{m} et Rⁿ sont choisis indépendamment pour chacune des m unités (O-R^{m}) et chacune des n unités (O-CO-Rⁿ),
et A^{Si} est un groupe OH, NH₂ ou CO₂H;
ii. au moins un polyisocyanate avec au moins trois groupements NCO,
iii. au moins un (méth)acrylate avec la structure (II) suivante : 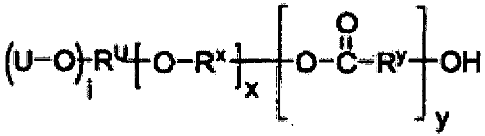
où x = 0 à 100, y = à 100,
U représente un des groupes suivants : 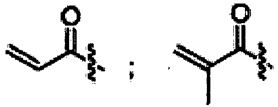
R^{U} représente un groupement organique avec (i+1) liaisons, où i = 1 à 5,
les x unités de (O-R^{x}) et les y unités de (O-CO-R^{y}) dans l'unité structurelle [O-R^{x}]ₓ-[O-CO-R^{y}]_{y} sont disposées dans un ordre quelconque,
R^{x} représente un groupement alkylène linéaire avec 2 à 4 atomes de carbone ou un groupement alkylène ramifié avec 3 ou 4 atomes de carbone,
R^{y} représente un groupement alkylène linéaire avec 2 à 6 atomes de carbone ou un groupement alkylène ramifié avec 3 à 6 atomes de carbone ou un groupement alkylène cyclique avec 3 à 6 atomes de carbone,
les groupements R^{x} et R^{y} sont choisis indépendamment pour chacune des x unités (O-R^{x}) et chacune des y unités (O-CO-R^{y}), et
iv. optionnellement un ou plusieurs composés réactifs avec des isocyanates et ayant la structure (III) suivante qui est différente de celle des composés utilisés dans i à iii :
R^{z}-(A^{z})_{z} ; avec z = 1 ou 2,
où R^{z} représente un groupement aliphatique ou aromatique et A^{z} est un groupe OH, NH₂ ou CO₂H,
et m + n + x + y ≥ 3,
dans une quantité de 0,01 à 5 % en poids, les indications de pourcentages en poids se rapportant à la formulation totale de la composition de revêtement durcissable par irradiation.

4. Composition de revêtement durcissable par irradiation selon la revendication 3, **caractérisée en ce qu**'elle comprend 30 à 99 % en poids du polymère (a) durcissable par irradiation, 0,01 à 5 % en poids d'au moins un adduit de polyisocyanate (b), et comme composants additionnels
(c) 0 à 65 % en poids d'au moins un diluant réactif et
(d) 0,5 à 5 % en poids d'au moins un photoinitiateur,
les indications de pourcentages en poids se rapportant à la formulation totale de la composition de revêtement durcissable par irradiation.

5. Composition de revêtement durcissable par irradiation selon l'une quelconque des revendications 3 et 4, **caractérisée en ce que** des (méth)acrylates d'uréthane ou des résines de polyester(méth)acrylate sont utilisés comme polymère (a).
